# EUROPÄISCHE PATENTSCHRIFT

(11) **EP 3 197 953 B1**
(45) Veröffentlichungstag und Bekanntmachung des Hinweises auf die Patenterteilung: **23.05.2018**
(21) Anmeldenummer: 15763601.0
(22) Anmeldetag: 16.09.2015
(51) Int. Cl.: C08L 33/12

(54) **SCHLAGZÄH AUSGERÜSTETE FORMMASSE MIT VERBESSERTEM EIGENSCHAFTSPROFIL**
IMPACT-RESISTANT MOULDING MATERIAL WITH IMPROVED CHARACTERISTIC PROFILE
MASSE DE FORMAGE ÉQUIPÉE D'UNE RÉSISTANCE AUX CHOCS DOTÉE DE PROPRIÉTÉS SPÉCIFIQUES AMÉLIORÉES

(30) Priorität: 24.09.2014 EP 14186197
(43) Veröffentlichungstag der Anmeldung: 02.08.2017
(73) Patentinhaber: Evonik Röhm GmbH, 64293 Darmstadt (DE)
(72) Erfinder: DÖSSEL, Lukas Friedrich, 64295 Darmstadt (DE); MÜLLER, Reiner, 64584 Biebesheim (DE); HÖSS, Werner, 64409 Messel (DE); KLITSCH, Julian, 64546 Mörfelden-Walldorf (DE)
(86) Internationale Anmeldenummer: PCT/EP2015/071216
(87) Internationale Veröffentlichungsnummer: WO 2016/046043

(56) Entgegenhaltungen:
- WO-A1-2004/056893

## Beschreibung

Die Erfindung betrifft schlagzäh ausgerüstete Formmassen, insbesondere schlagzähes PMMA, mit verbessertem Eigenschaftsprofil (unter anderem gute optische Eigenschaften), daraus erhältliche Formartikel sowie die Verwendung der Formmasse und der Formartikel.

Es ist bekannt, dass die Schlagzähigkeit von Formmassen, insbesondere von Poly(meth)acrylat-Formmassen, verbessert werden kann, indem man der Formmasse eine geeignete Menge sogenannter Schlagzähmodifizierer zusetzt. Dabei hat sich in der Technik der Einsatz von durch Emulsionspolymerisation hergestellten Schlagzähmodifizierungsmitteln, sogenannten Kern-Schale-Teilchen und/oder Kern-Schale-Schale-Teilchen durchgesetzt. Diese weisen im allgemeinen eine elastomere Phase auf, wobei bei einem Kern-Schale-Aufbau meist der Kern und bei einem Kern-Schale-Schale-Aufbau meist die auf den Kern aufgepfropfte erste Schale die elastomere Phase darstellen.

Beispielsweise offenbart das US-Patent US 3 793 402 schlagzähe Formmassen, insbesondere auf Poly(meth)acrylat-Basis, welche 4 bis 90 Gew.-% eines mehrstufigen Kern-Schale-Schale-Teilchens mit einem harten Kern, einer elastomeren ersten Schale und einer harten zweiten Schale aufweisen. Typische Hauptbestandteile des Kerns und der zweiten Schale sind Alkylmethacrylate mit 1 bis 4 Kohlenstoffatomen im Alkylrest, insbesondere Methylmethacrylat. Die erste Schale ist im Wesentlichen aus Butadien, substituierten Butadienen und/oder Alkylacrylaten mit 1 bis 8 Kohlenstoffatomen im Alkylrest aufgebaut. Sie kann jedoch auch 0 bis 49,9 Gew.-%, insbesondere 0,5 bis 30 Gew.-% copolymerisierbare Monomer-Einheiten, wie beispielsweise copolymerisierbare, monoethylenischungesättigte Monomer-Einheiten, enthalten. Dabei ist gemäß US 3 793 402 die Anwesenheit von 10 bis 25 Gew.-% copolymerisierbaren, monoethylenisch-ungesättigten Monomer-Einheiten, insbesondere von Styrol, ganz besonders vorteilhaft.

Die Herstellung der Kern-Schale-Schale-Teilchen erfolgt durch mehrstufige Emulsionspolymerisation, wobei thermische Initiatoren, wie Persulfate oder Redox-Initiatorsysteme eingesetzt werden. Dabei soll die Polymerisation bei einer Temperatur im Bereich von 0 bis 125°C, insbesondere im Bereich von 30 bis 95°C erfolgen.

In ähnlicher Weise beschreibt die deutsche Patentanmeldung DE 41 21 652 A1 Schlagzähmodifizierer für thermoplastische Kunststoffe, wie Polymethylmethacrylat, bestehend aus einem wenigstens dreiphasigen Emulsionspolymerisat, enthaltend
A) einen harten Kern aus einem vernetzten Homo- oder Copolymerisat von ethylenisch-ungesättigten, radikalisch polymerisierbaren Monomeren;
B) einer in Gegenwart des Kernmaterials erzeugten Elastomerphase mit einer Glasübergangstemperatur nicht über 10°C, die aufgebaut ist aus
   a) einem Alkylester der Acrylsäure mit 1 bis 8 Kohlenstoffatomen im Alkylrest;
   b) wenigstens einem vernetzenden Comonomeren mit zwei oder mehr polymerisierbaren Doppelbindungen im Molekül;
   c) Arylalkylacrylat oder -methacrylat;
   d) einer in Gegenwart der Elastomerphase erzeugten Hartphase aus einem Homo- oder Copolymerisat von ethylenisch-ungesättigten, radikalisch polymerisierbaren Monomeren mit einer Glasübergangstemperatur von wenigstens 50°C.

Eine exemplarisch in dieser Druckschrift DE 41 21 652 A1 angeführte Formmasse (Beispiel 3) weist eine Izod-Kerbschlagzähigkeit von 6,2 kJ/m² bei Raumtemperatur, von 4,7 kJ/m² bei -10°C und von 3,7 kJ/m² bei -20°C auf. Die Vicat-Erweichungstemperatur der Formmasse beträgt dabei 97°C.

Die Herstellung der Kern-Schale-Schale-Teilchen erfolgt ebenfalls mittels mehrstufiger Emulsionspolymerisation, wobei Alkali- oder Ammoniumperoxodisulfat als Initiator eingesetzt werden und die Polymerisation bei einer Temperatur im Bereich von 20 bis 100°C, beispielsweise bei 50°C, durchgeführt wird.

Die deutsche Patentanmeldung DE 41 36 993 A1 offenbart schlagzähmodifizierte Formmassen, welche 10 bis 96 Gew.-% eines Polymerisats auf Basis von Polymethylmethacrylat und 4 bis 90 Gew.-% eines mehrstufigen Kern-Schale-Schale-Teilchens enthalten, wobei für die Herstellung des Kerns und der zweiten Schale jeweils eine Monomermischung eingesetzt wird, die im Wesentlichen Methylmethacrylat enthält. Die Monomermischung für die erste Schale umfasst 60 bis 89,99 Gew.-% Acrylsäurealkylester mit 1 bis 20 Kohlenstoffatomen im Alkylrest und/oder Cycloalkylacrylate mit 5 bis 8 Kohlenstoffatomen im Cycloalkylrest und 10 bis 39,99 Gew.-% Acrylsäure-phenyl-alkylester mit 1 bis 4 Kohlenstoffatomen im Alkylrest sowie gegebenenfalls weitere Bestandteile. Der mittlere Teilchendurchmesser der Kern-Schale-Schale-Teilchen liegt im Bereich von 50 bis 1000 nm, insbesondere im Bereich von 150 bis 400 nm.

Gemäß dieser Druckschrift werden die Kern-Schale-Schale-Teilchen durch ein mehrstufiges Saatlatex-Verfahren erhalten, bei welchem man Ammonium- oder Alkaliperoxodisulfate, wie Kaliumperoxodisulfat, oder Initiatorkombinationssysteme als Polymerisationsinitiatoren einsetzt, wobei die Polymerisationstemperatur im Fall der thermischen zu aktivierenden Ammonium- und Alkaliperoxodisulfate bei 50 bis 100°C liegen soll.

Das europäische Patent EP 0 828 772 B1 beschreibt die Schlagzähmodifizierung von Poly(meth)acrylaten mittels mehrstufiger Kern-Schale-Teilchen bzw. Kern-Schale-Schale-Teilchen, die aus einem Kern, einer ersten Schale und gegebenenfalls einer zweiten Schale bestehen und von vinylisch ungesättigten Verbindungen mit mindestens zwei gleich reaktiven Doppelbindungen frei sind. Dabei enthält der Kern ein erstes (Meth)acrylpolymer. Die erste Schale weist ein Polymer mit tiefer Glasübergangstemperatur auf, welches 0 bis 25 Gew.-%, insbesondere 5 bis 26 Gew.-%, eines styrolischen Monomers und 75 bis 100 Gew.-% eines (Meth)acrylmonomers, das ein Homopolymer mit einer Glasübergangstemperatur zwischen -75 und -5°C bildet, umfasst. Die gegebenenfalls vorhandene zweite Schale enthält ein zweites (Meth)acrylpolymer, das dem ersten (Meth)acrylpolymer entsprechen oder von ihm verschieden sein kann. Der Gesamtdurchmesser der Kern-Schale-Teilchen bzw. Kern-Schale-Schale-Teilchen liegt im Bereich von 250 bis 320 nm.

Die Herstellung der Kern-Schale-Teilchen bzw. Kern-Schale-Schale-Teilchen erfolgt wiederum durch mehrstufige Emulsionspolymerisation bei 80°C, wobei als Initiator ein Kaliumpersulfat eingesetzt wird.

Die internationale Patentanmeldung WO 2004/056893 beschreibt effiziente Verfahren zur Herstellung von Kern-Schale-Teilchen bzw. Kern-Schale-Schale-Teilchen. Als zur Schlagzähmodifizierung von Polyalkyl(meth)acrylat-Formmassen besonders geeignet werden Kern-Schale-Teilchen bzw. Kern-Schale-Schale-Teilchen mit einem Gesamtradius von 150,0 bis 250,0 nm beschrieben. Die
WO 2004/056893 offenbart ein Verfahren zur Herstellung von Kern-Schale-Teilchen bzw. Kern-Schale-Schale-Teilchen mit einem Feststoffgehalt an Polymer in der wässrigen Dispersion von über 50 Gew.-% bei gleichzeitig überraschend geringer Koagulatbildung.

Dem Fachmann auf dem vorliegenden Gebiet der Technik ist hinlänglich bekannt, dass häufig Mengen von bis zu 40 Gew.-% von bekannten Kern-Schale-Schale-Teilchen einer Formmassen-Grundlage zugesetzt werden müssen, um eine ausreichend hohe Schlagzähigkeit zu erzielen. Die Zugabe derartig hoher Mengen an Kern-Schale-Schale-Teilchen führt jedoch einerseits zu einer Absenkung der Vicat-Erweichungstemperatur der gesamten Formmasse und andererseits erhöht sich die Schmelzeviskosität. Dies erschwert die Nutzung solcher Formmassen in einigen Anwendungsgebieten (z.B. große / dünnwandige Bauteile im Spritzguss). Wünschenswert ist somit für den Fachmann, dass eine Formmasse eine ausreichende Wärmeformbeständigkeit besitzt und die Vicat-Erweichungstemperatur somit ausreichend hoch ist, und weiterhin dass eine Formmasse eine ausreichend niedrige Schmelzeviskosität, d.h. eine hohe Schmelzevolumenrate, angegeben als MVR, besitzt.

Weiterhin ist eine grundlegende Forderung an Formmassen für Produkte, insbesondere für Anwendungen wie Verscheibungen, eine ausreichende optische Klarheit, insbesondere auch bei erhöhter Temperatur, zu besitzen. Dabei werden Produkte mit einem Haze (=Trübwert) kleiner gleich 3,0 %, insbesondere kleiner gleich 2,0 %, besonders kleiner gleich 1,5 %, und ganz besonders kleiner gleich 1,0 %, gemessen mittels Hazemeter BYK Gardner Hazegard-plus gemäß ASTM D 1003 (1997) bei 23 °C, als optisch ausreichend klar angesehen. Bezüglich Haze bei 80°C werden Haze-Werte von kleiner gleich 21,0 %, insbesondere kleiner gleich 20,0 %, besonders kleiner gleich 18,0 %, und ganz besonders kleiner gleich 16,0 %, gemessen mittels Hazemeter BYK Gardner Hazegard-plus gemäß ASTM D 1003 (1997) bei 80 °C, als optisch ausreichend klar angesehen.

Wünschenswert für die Formmassen, die zur Herstellung von Beleuchtung und Verscheibungen dienen, ist daher eine deutlich reduzierte Haze-Zunahme bei erhöhter Temperatur, bei Beibehaltung einer ausreichend guten Schlagzähigkeit. Insbesondere beim Einsatz der Produkte in Beleuchtungsanwendungen mit Signaleinfärbungen sollte keine Farbortverschiebung aufgrund einer Trübungszunahme auftreten, was bisher den Einsatz schlagzäh modifizierter Formmassen limitierte.

Wünschenswert für die Formmassen, die zur Herstellung von großen und/oder dünnwandigen schlagzähen Bauteilen dienen, und somit auch für die Bauteile selbst, ist eine gute Wärmeformbeständigkeit, insbesondere wenn sie - die Formmasse und/oder die Bauteile, ggf. auch über einen langen Zeitraum, einer erhöhten Temperatur ausgesetzt werden.

Dem Fachmann sind somit mehrere Parameter bekannt, die darüber entscheiden, ob eine Formmasse für die beabsichtigten Anwendungen geeignet ist:
- Schlagzähigkeit
- Wärmeformbeständigkeit
- Schmelzeviskosität
- Haze.

Ihm sind auch verschiedene Möglichkeiten bekannt, wie die Parameter einzeln beeinflusst werden können:
a) Die Schlagzähigkeit kann durch eine Erhöhung der Menge an Schlagzähmodifier verbessert werden. Eine Reduktion der Menge in der Formmasse führt zu einer Abnahme der Schlagzähigkeit. Eine Erhöhung der Schlagzähigkeit kann bei gleicher Gewichtsmenge an Kern-Schale-Schale-Teilchen insbesondere durch eine Vergrößerung der Kern-Schale-Schale-Teilchen erreicht werden oder durch eine deutliche Erhöhung des Anteils an Comonomer(en) mit einem deutlich niedrigeren Tg als die Formmasse selbst. Dies hat aber einen negativen Einfluss auf die Optik (Haze). Auf den Stand der Technik gestützt liegt die herrschende Meinung vor, dass Schlagzähmodifier mit einem geringen Radius, insbesondere mit einem Radius <150nm, wegen der geringen zu erzielenden Schlagzähwirkung eher ungeeignet sind, durch ihren Zusatz die Schlagzähigkeit einer Formmassen-Grundlage, insbesondere einer PMMA-Formmasse, zu erhöhen.
b) Wärmeformbeständigkeit: Ein Schlagzähmodifier enthält Comonomere mit einem deutlich niedrigeren Tg als die Formmasse selbst. Die Zugabe führt daher in Summe stets zu einer Absenkung der Wärmeformbeständigkeit (Vicat-Erweichungstemperatur). Um diesem Effekt entgegenzuwirken, kann die Gewichtsmenge an Schlagzähmodifier reduziert werden oder indem der Anteil an Comonomer(en) mit einem deutlich niedrigeren Tg als die Formmasse selbst reduziert wird, wobei dies jedoch eine Verschlechterung der Schlagzähigkeit mit sich bringt.
c) Schmelzeviskosität: Um eine niedrigere Schmelzeviskosität zu erzielen, kann der Gehalt an Schlagzähmodifier reduziert werden, wodurch jedoch wieder die Schlagzähigkeit der Formmasse verschlechtert wird. Eine Alternative hierzu besteht darin, die Größe des Schlagzähmodifiers zu erhöhen. Hierdurch wird jedoch wieder der Haze negativ beeinflusst.
d) Haze: Für sehr gute Haze-Werte sollten möglichst kleine Schlagzähmodifier und ein möglichst geringer Anteil an Schlagzähmodifier in der Grund-Formmasse eingesetzt werden. Dies geht jedoch zu Lasten der Schlagzähigkeit, wie bereits unter a) diskutiert.

Dem Fachmann ist somit bekannt, dass er verschiedene Möglichkeiten hat, Eigenschaften einer schlagzähen (PMMA)-Formmasse zu optimieren, jedoch werden bei der Verbesserung bestimmter Eigenschaften andere Eigenschaften negativ beeinflusst. Wünschenswert wäre jedoch eine Lösung, bei der alle Eigenschaften Mindestanforderungen genügen.

Aufgabe der vorliegenden Erfindung war es daher, eine Formmasse bereitzustellen, die eine möglichst hohe Schlagzähigkeit in Kombination mit einer möglichst hohen Wärmeformbeständigkeit und einer möglichst niedrigen Schmelzeviskosität und einem möglichst geringem Haze (bei Raumtemperatur und bei Erwärmung) aufweist.

Dabei bestand insbesondere die weitere Aufgabe, eine Formmasse, vorzugsweise eine PMMA-Formmasse, bereitzustellen, die folgende Vorgaben erfüllt:
- eine Charpy-Schlagzähigkeit nach ISO 179 von mindestens 40,0 kJ/m² bei 23 °C und
- einen Haze nach ASTM D 1003 (1997) von ≤ 3% bei 23 °C und einen Haze nach ASTM D 1003 (1997) von ≤ 21% bei 80 °C und
- eine Vicat-Erweichungstemperatur nach DIN ISO 306 (Aug. 1994) von ≥ 98 °C und
- eine Schmelzevolumenrate (=MVR) nach ISO 1133 (230°C; 3,8Kg) von ≥ 1,0 cm³/10min.

Eine besondere Aufgabe bestand darin weiter, eine Formmasse, vorzugsweise eine PMMA-Formmasse, bereitzustellen, die folgende Vorgaben erfüllt:
- eine Charpy-Schlagzähigkeit nach ISO 179 von mindestens 80,0 kJ/m² bei 23 °C und
- einen Haze nach ASTM D 1003 (1997) von ≤ 1,5 % bei 23 °C und einen Haze nach ASTM D 1003 (1997) von ≤ 18 % bei 80 °C und
- eine Vicat-Erweichungstemperatur nach DIN ISO 306 (Aug. 1994) von ≥ 100 °C und
- eine Schmelzevolumenrate (=MVR) nach ISO 1133 (230°C; 3,8Kg) von ≥ 2,5 cm³/10min.

Diese Aufgaben sowie weitere, die zwar nicht explizit genannt werden, sich aber aus den hierin diskutierten Zusammenhängen ableiten lassen oder sich aus diesen ergeben, werden überraschend gelöst, durch die Formmasse gemäß Anspruch 1 und die Formartikel gemäß Anspruch 10 sowie die Verwendungen gemäß den Ansprüchen 12 und 13. Bevorzugte Ausführungsformen sind in den Unteransprüchen aufgeführt.

Gegenstand des Patentes ist somit eine Formmasse, vorzugsweise eine PMMA-Formmasse, die jeweils bezogen auf ihr Gesamtgewicht Folgendes umfasst:
I. 10,0 bis ≤ 35,0 Gew.-%, vorzugsweise 12,0 bis 33,0 Gew.-%, weiter bevorzugt 14,0 bis 30,0 Gew.-%, ganz bevorzugt 15,0 bis 25,0 Gew.-%, mindestens eines Kern-Schale-Schale-Teilchens (das wie folgt definiert ist),
II. 1,0 bis 90,0 Gew.-%, vorzugsweise 1,0 bis 85,0 Gew.-%, weiter bevorzugt 1,0 bis 80,0 Gew.-%, mindestens eines (Meth)acrylpolymers,
III. 0,0 bis 45,0 Gew.-%, vorzugsweise 0,0 bis 30,0 Gew.-%, bevorzugt 0,0 bis 10,0 Gew.-%, Styrol-Acrylnitril-Copolymere, und
IV. 0,0 bis 10,0 Gew.-% weiterer Zusatzstoffe,
wobei sich die Gewichtsprozente der Komponenten I. bis IV. zu 100,0 Gew.-% addieren und wobei II. oder die Mischung aus II., III. und/oder IV. so gewählt ist, dass sie einen Brechungsindex aufweist, der sich aus einer Messung gemäß ISO 489 (Methode A) um nicht mehr als 0,01, vorzugsweise nicht mehr als 0,002, bevorzugt nicht mehr als 0,001 Einheiten vom Brechungsindex von I. unterscheidet.

Die Messung des Brechungsindex erfolgte nach ISO 489 (Methode A). Alle Messungen wurden an Formkörpern von 3mm Dicke durchgeführt unter Verwendung von 1-Bromnaphthalin als Immersionsflüssigkeit.

### Herstellung der Formkörper:

a) Bei Kern-Schale-Schale-Teilchen:
   Aus Kern-Schale-Schale-Teilchen wurde eine Pressplatte hergestellt (3 mm Dicke, Durchmesser 50 mm, hergestellt bei 100 kN, 210 °C, 20 Minuten Pressdauer), an der die Messung erfolgte.
b) Bei Grund-Formmassen (=Matrixpolymer; entspricht II. oder einer Mischung aus II., III. und/oder IV.):
   Eine Spritzgussplatte wurde auf einer Spritzgussmaschine Battenfeld BA gemäß ISO 294 bei 250 °C Schmelzetemperatur spritzgegossen, so dass ein Formkörper mit den Maßen 65 mm x 40 mm x 3 mm erhalten wurde.

Das Kern-Schale-Schale-Teilchen I., das im Rahmen der Erfindung eingesetzt wird, ist hergestellt oder herstellbar nach einem Verfahren, bei welchem man
a) Wasser und Emulgator vorlegt,
b) 20,0 bis 45,0 Gew.-Teile einer ersten Zusammensetzung, umfassend die Komponenten A), B), C) und D), zugibt und bis zu einem Umsatz von mindestens 85,0 Gew.-%, bezogen auf das Gesamtgewicht der Komponenten A), B), C) und D), polymerisiert,
c) 35,0 bis 55,0 Gew.-Teile einer zweiten Zusammensetzung, umfassend die Komponenten E), F) und G), zugibt und bis zu einem Umsatz von mindestens 85,0 Gew.-%, bezogen auf das Gesamtgewicht der Komponenten E), F) und G), polymerisiert,
d) 10,0 bis 30,0 Gew.-Teile einer dritten Zusammensetzung, umfassend die Komponenten H), I) und J), zugibt und bis zu einem Umsatz von mindestens 85,0 Gew.-%, bezogen auf das Gesamtgewicht der Komponenten H), I) und J), polymerisiert,
wobei sich die angegebenen Gewichtsteile der Zusammensetzungen b), c) und d) zu 100,0 Gewichtsteilen addieren und
wobei die relativen Anteile aller Substanzen A) bis J) derart gewählt sind, dass man Kern-Schale-Schale-Teilchen mit einem Gesamtradius, gemessen nach dem Coulter-Verfahren, im Bereich von > 125,0 nm und < 180 nm, vorzugsweise im Bereich von > 128,0 nm und < 160 nm, bevorzugt im Bereich von > 135,0 nm und < 150 nm, erhält und
wobei jede Polymerisation in dem Verfahren gemäß I. bei einer Temperatur im Bereich von > 60 bis < 95 °C, vorzugsweise > 70 °C und < 90 °C, weiter bevorzugt ≥ 75 und ≤ 85 °C, durchgeführt wird.

Die Verfolgung des Reaktionsfortschritts der Polymerisation in jeden Schritt kann auf bekannte Weise, beispielsweise gravimetrisch oder mittels Gaschromatographie erfolgen.

Der Gegenstand der vorliegenden Erfindung gemäß Anspruch 1 ist somit eine Formmasse enthaltend jeweils bezogen auf ihr Gesamtgewicht:
I. 10,0 bis ≤ 35,0 Gew.-%, vorzugsweise 12,0 bis 33,0 Gew.-%, weiter bevorzugt 14,0 bis 30,0 Gew.-%, ganz bevorzugt 15,0 bis 25,0 Gew.-%, mindestens eines Kern-Schale-Schale-Teilchens hergestellt oder herstellbar nach einem Verfahren bei welchem man
   a) Wasser und Emulgator vorlegt,
   b) 20,0 bis 45,0 Gew.-Teile einer ersten Zusammensetzung enthaltend:
      A) 50,0 bis 99,9 Gew.- Teile, vorzugsweise 71,0 bis 99,9 Gew.- Teile, Alkylmethacrylate mit 1 bis 20 Kohlenstoffatomen im Alkylrest,
      B) 0,0 bis 40,0 Gew.-Teile, vorzugsweise 0,0 bis 19,0 Gew.- Teile, Alkylacrylate mit 1 bis 20 Kohlenstoffatomen im Alkylrest,
      C) 0,1 bis 10,0 Gew.- Teile vernetzende Monomere, wobei C vorzugsweise Allylmethacrylat ist oder wobei C zu mindestens 50 Gew.-%, vorzugsweise zu mindestens 65 Gew.-%, bevorzugt zu mindestens 80 Gew.-%, weiter bevorzugt zu mindestens 90 Gew.-%, jeweils bezogen auf das Gesamtgewicht von C, Allylmethacrylat enthält, und
      D) 0,0 bis 8,0 Gew.- Teile styrolische Monomere der allgemeinen Formel (I) 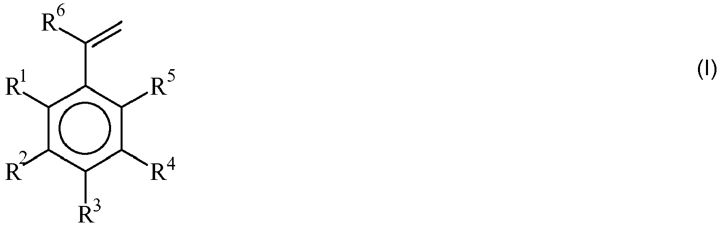 wobei die Reste R¹ bis R⁵ jeweils unabhängig voneinander Wasserstoff, ein Halogen, eine C₁₋₆-Alkylgruppe oder eine C₂₋₆-Alkenylgruppe bezeichnen und der Rest R⁶ Wasserstoff oder eine Alkylgruppe mit 1 bis 6 Kohlenstoffatomen ist,
         zugibt und bis zu einem Umsatz von mindestens 85,0 Gew.-%, bezogen auf das Gesamtgewicht der Komponenten A), B), C) und D), polymerisiert,
   c) 35,0 bis 55,0 Gew.-Teile einer zweiten Zusammensetzung enthaltend:
      E) 80,0 bis 100,0 Gew.- Teile (Meth)acrylate, wobei E vorzugsweise Butylacrylat ist oder wobei E zu mindestens 50 Gew.-%, vorzugsweise zu mindestens 65 Gew.-%, bevorzugt zu mindestens 80 Gew.-%, weiter bevorzugt zu mindestens 90 Gew.-%, jeweils bezogen auf das Gesamtgewicht von E, Butylacrylat enthält
      F) 0,05 bis 5,0 Gew.-Teile vernetzende Monomere, wobei F vorzugsweise Allylmethacrylat ist oder wobei F zu mindestens 50 Gew.-%, vorzugsweise zu mindestens 65 Gew.-%, bevorzugt zu mindestens 80 Gew.-%, weiter bevorzugt zu mindestens 90 Gew.-%, jeweils bezogen auf das Gesamtgewicht von F, Allylmethacrylat enthält, und
      G) 0,0 bis 25,0 Gew.- Teile styrolische Monomere der allgemeinen Formel (I),
      zugibt und bis zu einem Umsatz von mindestens 85,0 Gew.-%, bezogen auf das Gesamtgewicht der Komponenten E), F) und G), polymerisiert,
   d) 10,0 bis 30,0 Gew.-Teile einer dritten Zusammensetzung enthaltend:
      H) 50,0 bis 100,0 Gew.- Teile Alkylmethacrylate mit 1 bis 20 Kohlenstoffatomen im Alkylrest,
      I) 0,0 bis 40,0 Gew.- Teile Alkylacrylate mit 1 bis 20 Kohlenstoffatomen im Alkylrest und
      J) 0,0 bis 10,0 Gew.- Teile styrolische Monomere der allgemeinen Formel (I)
      zugibt und bis zu einem Umsatz von mindestens 85,0 Gew.-%, bezogen auf das Gesamtgewicht der Komponenten H), I) und J), polymerisiert,
      wobei sich die angegebenen Gewichtsteile der Zusammensetzungen b), c) und d) zu 100,0 Gewichtsteilen addieren,
      wobei die relativen Anteile aller Substanzen A) bis J) derart gewählt sind, dass man Kern-Schale-Schale-Teilchen mit einem Gesamtradius, gemessen nach dem Coulter-Verfahren, im Bereich von > 125,0 nm und < 180 nm, vorzugsweise im Bereich von > 128,0 nm und < 160 nm, bevorzugt im Bereich von > 135,0 nm und < 150 nm, erhält und
      wobei jede Polymerisation in dem Verfahren gemäß I. bei einer Temperatur im Bereich von > 60 bis < 95 °C, vorzugsweise > 70 °C und < 90 °C, weiter bevorzugt ≥ 75 und ≤ 85 °C, durchgeführt wird;
II. 1,0 bis 90,0 Gew.-%, vorzugsweise 1,0 bis 85,0 Gew.-%, weiter bevorzugt 1,0 bis 80,0 Gew.-%, mindestens eines (Meth)acrylpolymers,
III. 0,0 bis 45 Gew.-%, vorzugsweise 0,0 bis 30 Gew.-%, bevorzugt 0,0 bis 10,0 Gew.-%, Styrol-Acrylnitril-Copolymere, und
IV. 0,0 bis 10,0 Gew.-% weiterer Zusatzstoffe
wobei sich die Gewichtsprozente der Komponenten I) bis IV) zu 100,0 Gew.-% addieren und
wobei II., oder die Mischung aus II., III. und/oder IV. so gewählt ist, dass sie einen Brechungsindex aufweist, der sich bei einer Messung gemäß ISO 489 (Methode A) um nicht mehr als 0,01, vorzugsweise um nicht mehr als 0,002, bevorzugt um nicht mehr als 0,001, Einheiten vom Brechungsindex von I. unterscheidet.

Diese erfindungsgemäße Formmasse ist hinsichtlich der gewünschten Eigenschaften in verschiedener Hinsicht verbessert. Zum einen ist der mindestens eine Schlagzähmodifier der erfindungsgemäßen Formmasse, vorzugsweise der erfindungsgemäßen PMMA-Formmasse, in seiner Zusammensetzung von Kern und den beiden Schalen speziell ausgewählt. Des Weiteren muss dieser optimierte Schlagzähmodifier nach dem beschriebenen thermischen Polymerisationsverfahren bei mindestens > 60°C hergestellt oder herstellbar sein. Der Gewichtsanteil an Schlagzähmodifier in der erfindungsgemäßen Formmasse, vorzugsweise in der erfindungsgemäßen PMMA-Formmasse, ist auf maximal 35 Gew.-% beschränkt. Obwohl somit in Form der erfindungsgemäßen Formmasse eine Formmasse mit im Vergleich geringerem Anteil an Schlagzähmodifier als üblicherweise im Stand der Technik berichtet vorliegt, erzielt diese erfindungsgemäße Formmasse gerade in Bezug auf ihre Schlagzähigkeit unerwartet hohe Werte. Dies ist insbesondere völlig überraschend, da der erfindungsgemäß einzusetzende Schlagzähmodifier einen verhältnismäßig kleinen Teilchenradius, nämlich einen Radius zwischen 125 und 180 nm, vorzugsweise zwischen 128 und 160 nm hat. Die Formmasse ist mit ihren Bestandteilen weiterhin bezüglich des Brechungsindex angepasst. Durch die Anpassung des Brechungsindexes von Schlagzähmodifier und der umgebenden Matrix erfolgt insbesondere ein positiver Einfluss auf die Haze-Werte.

Eine weiter erfindungsgemäß bevorzugte Ausführungsform ist eine Formmasse gemäß obiger Beschreibung dadurch gekennzeichnet, dass die zweite Zusammensetzung des Kern-Schale-Schale-Teilchens nach I. als G) mehr als 8,0 Gew.- Teile und bis zu 19,95 Gew.- Teile, vorzugsweise 15,0 bis 19,95 Gew.-Teile, styrolische Monomere der allgemeinen Formel (I) enthält.

Weiterhin ist eine erfindungsgemäße Formmasse gemäß obiger Beschreibung vorzugsweise dadurch gekennzeichnet, dass die zweite Zusammensetzung des Kern-Schale-Schale-Teilchens nach I. einen Tg < -10°C hat. Weiter vorzugsweise hat diese erfindungsgemäße Formmasse ebenso eine erste Zusammensetzung des Kern-Schale-Schale-Teilchens nach I. mit einem Tg > 80°C. Ebenso vorzugsweise hat die erfindungsgemäße Formmasse, in der die zweite Zusammensetzung des Kern-Schale-Schale-Teilchens nach I. einen Tg < -10°C hat, ebenso eine dritte Zusammensetzung des Kern-Schale-Schale-Teilchens nach I. mit einem Tg > 80°C. Ganz bevorzugt ist eine erfindungsgemäße Formmasse dadurch gekennzeichnet, dass die zweite Zusammensetzung des Kern-Schale-Schale-Teilchens nach I. einen Tg < -10°C, eine erste Zusammensetzung des Kern-Schale-Schale-Teilchens nach I. mit einem Tg > 80°C und eine dritte Zusammensetzung des Kern-Schale-Schale-Teilchens nach I. mit einem Tg > 80°C hat.

Die Initiierung der Polymerisationen b), c) und/oder d) kann mit den für die Emulsionspolymerisation gebräuchlichen Initiatoren erfolgen. Geeignete organische Initiatoren sind beispielsweise Hydroperoxide, wie tert-Butyl-Hydroperoxid oder Cumolhydroperoxid. Geeignete anorganische Initiatoren sind Wasserstoffperoxid sowie die Alkalimetall- und die Ammoniumsalze der Peroxodischwefelsäure, insbesondere Natrium- und Kaliumperoxodisulfat. Die genannten Initiatoren können sowohl einzeln als auch in Mischung verwendet werden. Sie werden vorzugsweise in einer Menge von 0,05 bis 3,0 Gew.-%, bezogen auf das Gesamtgewicht der Monomere der jeweiligen Stufe, eingesetzt.

In einer weiteren bevorzugten Ausführungsform wird die Polymerisation in den Schritten b) bis d) unter Verwendung eines Peroxodisulfats, vorzugsweise unter Verwendung von Ammonium- und/oder Alkaliperoxodisulfat, initiiert.

Als Polymerisationsinititiator können z. B. 0,01 bis 0,5 Gew.-% an Alkali- oder Ammoniumperoxodisulfat, bezogen auf die Wasserphase, eingesetzt werden, wobei die Polymerisation bei Temperaturen von 60 bis 95°C ausgelöst wird. Bevorzugt arbeitet man mit Redoxsystemen, beispielsweise aus 0,01 bis 0,05 Gew.-% organischen Hydroperoxiden und 0,05 bis 0,15 Gew.-% Rongalit® bei Temperaturen von 70 bis 85°C. Bei der Polymerisation der Hartphase wird in der Regel eine geeignete Menge eines Kettenübertragungsmittels, z. B. eines Mercaptans, mitverwendet, um das Molekulargewicht des Hartphasenpolymerisats an das der Formmasse anzugleichen, die mit dem dreiphasigen Emulsionspolymerisat modifiziert werden soll.

Der Initiator kann vorgelegt oder zudosiert werden. Weiterhin ist es auch möglich, einen Teil des Initiators vorzulegen und den Rest hinzu zu dosieren.

Die Stabilisierung des Ansatzes kann mittels Emulgatoren und/oder Schutzkolloiden erfolgen. Bevorzugt erfolgt die Stabilisierung durch Emulgatoren, um eine niedrige Dispersionsviskosität zu erhalten.

In dem Verfahren zum Erhalten von I. können anionische und/oder nichtionische Emulgatoren eingesetzt werden.

In dem Verfahren zum Erhalten von I. werden im Schritt a) bevorzugt 90,00 bis 99,99 Gew.-Teile Wasser und 0,01 bis 10,00 Gew.-Teile Emulgator vorlegt, wobei sich die angegebenen Gewichtsteile zu 100,00 Gewichtsteilen addieren.

Die Gesamtmenge an Emulgator beträgt vorzugsweise 0,1 bis 5 Gew.-%, insbesondere 0,5 bis 3 Gew.-%, bezogen auf das Gesamtgewicht der Monomere A) bis J). Besonders geeignete Emulgatoren sind anionische und/oder nichtionische Emulgatoren oder deren Mischungen, insbesondere:
- Alkylsulfate, vorzugsweise solche mit 8 bis 18 Kohlenstoffatomen im Alkylrest, Alkyl- und Alkylarylethersulfate mit 8 bis 18 Kohlenstoffatomen im Alkylrest und 1 bis 50 Ethylenoxideinheiten;
- Sulfonate, vorzugsweise Alkylsulfonate mit 8 bis 18 Kohlenstoffatomen im Alkylrest, Alkylarylsulfonate mit 8 bis 18 Kohlenstoffatomen im Alkylrest, Ester und Halbester der Sulfobernsteinsäure mit einwertigen Alkoholen oder Alkylphenolen mit 4 bis 15 Kohlenstoffatomen im Alkylrest; gegebenenfalls können diese Alkohole oder Alkylphenole auch mit 1 bis 40 Ethylenoxideinheiten ethoxyliert sein;
- Phosphorsäureteilester und deren Alkali- und Ammoniumsalze, vorzugsweise Alkyl- und Alkylarylphosphate mit 8 bis 20 Kohlenstoffatomen im Alkyl- bzw. Alkylarylrest und 1 bis 5 Ethylenoxideinheiten;
- Alkylpolyglykolether, vorzugsweise mit 8 bis 20 Kohlenstoffatomen im Alkylrest und 8 bis 40 Ethylenoxideinheiten;
- Alkylarylpolyglykolether, vorzugsweise mit 8 bis 20 Kohlenstoffatomen im Alkyl- bzw. Alkylarylrest und 8 bis 40 Ethylenoxideinheiten;
- Ethylenoxid/Propylenoxid-Copolymere, vorzugsweise Blockcopolymere, günstigerweise mit 8 bis 40 Ethylenoxid- bzw. Propylenoxideinheiten.

Die Emulsionspolymerisation wird in einer erfindungsgemäßen Ausführungsform in Gegenwart von anionischen Emulgatoren durchgeführt, die aus der Gruppe ausgewählt sind, bestehend aus Paraffinsulfonaten, Alkylsulfosuccinaten und alkoxylierte und sulfierte Paraffinen.

Bevorzugt werden Gemische aus anionischem Emulgator und nichtionischen Emulgator eingesetzt. Dabei haben sich Gemische aus einem Ester oder Halbester der Sulfobernsteinsäure mit einwertigen Alkoholen oder Alkylphenolen mit 4 bis 15 Kohlenstoffatomen im Alkylrest als anionischem Emulgator und einem Alkylpolyglykolether, bevorzugt mit 8 bis 20 Kohlenstoffatomen im Alkylrest und 8 bis 40 Ethylenoxideinheiten, als nichtionischem Emulgator in einem Gewichtsverhältnis von 8 : 1 bis 1 : 8 ganz besonders bewährt.

Gegebenenfalls können die Emulgatoren auch in Mischung mit Schutzkolloiden eingesetzt werden. Geeignete Schutzkolloide umfassen u. a. teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrol-Maleinsäure- und Vinylethermaleinsäure-Copolymere. Falls Schutzkolloide eingesetzt werden, erfolgt dies vorzugsweise in einer Menge von 0,01 bis 1,0 Gew.-%, bezogen auf die Gesamtmenge der Monomere A) bis J). Die Schutzkolloide können vor dem Start der Polymerisation vorgelegt oder zudosiert werden.

In einer bevorzugten Ausführungsform legt man in dem Verfahren zum Erhalten von I. eine wässrige Emulsion vor, welche einen Alkylalkohol mit 12 bis 20 Kohlenstoffatomen im Alkylrest enthält.

Bevorzugt wird die Polymerisation durch Erhitzen des Ansatzes auf die Polymerisationstemperatur und Zudosierung des Initiators, vorzugsweise in wässriger Lösung, gestartet. Die Dosierungen von Emulgator und Monomeren können separat durchgeführt werden oder als Gemisch. Bei der Zudosierung von Gemischen aus Emulgator und Monomer wird so vorgegangen, dass Emulgator und Monomer in einem dem Polymerisationsreaktor vorgeschalteten Mischer vorgemischt werden. Bevorzugt werden der Rest an Emulgator und der Rest an Monomer, welche nicht vorgelegt wurden, nach dem Start der Polymerisation getrennt voneinander zudosiert. Vorzugsweise wird mit der Dosierung 15 bis 35 Minuten nach dem Start der Polymerisation begonnen.

Weiterhin ist es für die Zwecke der vorliegenden Erfindung besonders vorteilhaft, dass die Vorlage ein sogenanntes "Saatlatex" enthält, welches vorzugsweise durch Polymerisation von Alkyl(meth)acrylaten erhältlich ist.

Bevorzugt legt man eine wässrige Emulsion a) vor, welche ein Saatlatex enthält. In einer bevorzugten Ausführungsform wird ein Saatlatex vorgelegt, welches einen Teilchendurchmesser, gemessen nach dem Coulter-Verfahren, im Bereich von 10,0 bis 40,0 nm aufweist.

Diese kleinen Radien können nach einer definierten Aufpolymerisation des Saatlatex, bei der eine Schale um den Saatlatex aufgebaut wird und die Radien der so hergestellten Teilchen nach dem Coulter-Verfahren gemessen wurden, berechnet werden. Dieses in der Literatur bekannte Verfahren zur Partikelgrößen-Bestimmung beruht auf der Messung des elektrischen Widerstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden.

Zu dem Saatlatex werden die Monomerbestandteile des eigentlichen Kerns, d. h. die erste Zusammensetzung, vorzugsweise unter solchen Bedingungen zugegeben, dass die Bildung neuer Teilchen vermieden wird. Dadurch wird das in der ersten Verfahrensstufe entstehende Polymerisat schalenförmig um das Saatlatex herum gelagert. Analog werden die Monomerbestandteile des ersten Schalenmaterials (zweite Zusammensetzung) unter solchen Bedingungen zu dem Emulsionspolymerisat zugegeben, dass die Bildung neuer Teilchen vermieden wird. Dadurch wird das in der zweiten Stufe entstehende Polymerisat schalenförmig um den bestehenden Kern herum gelagert. Diese Vorgehensweise ist für jede weitere Schale entsprechend zu wiederholen.

Gemäß einer weiteren bevorzugten Ausführungsform der vorliegenden Erfindung werden die erfindungsgemäßen Kern-Schale-Schale-Teilchen durch ein Emulsionspolymerisationsverfahren, bei dem man anstatt des Saatlatex einen langkettigen, aliphatischen Alkohol, vorzugsweise mit 12 bis 20 Kohlenstoffatomen, emulgiert vorlegt, erhalten. In einer bevorzugten Ausführungsform dieses Verfahrens wird Stearylalkohol als langkettiger, aliphatischer Alkohol verwendet. Die Kern-Schale-Schale-Struktur wird analog zur oben beschriebenen Vorgehensweise durch schrittweise Zugabe und Polymerisation der entsprechenden Monomere unter Vermeidung der Bildung neuer Teilchen erhalten. Weitere Einzelheiten zum Polymerisationsverfahren kann der Fachmann den Patentschriften DE 3343766, DE 3210891, DE 2850105, DE 2742178 und DE 3701579 entnehmen.

Unabhängig von der konkreten Vorgehensweise hat es sich jedoch im Rahmen der vorliegenden Erfindung in dem Verfahren zum Erhalten von I. als ganz besonders günstig erwiesen, die zweite (gemäß c)) und die dritte (gemäß d)) Zusammensetzung nach Maßgabe des Verbrauchs zuzudosieren.

Die Einstellung der Kettenlängen, insbesondere der (Co)Polymerisate der zweiten Schale (dritte Zusammensetzung), kann durch Polymerisation des Monomers bzw. des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2- Mercaptoethanol oder 2-Ethylhexylthioglycolat, Pentaerythrittetrathioglycolat, wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1. Seite 66, Georg Thieme, Heidelberg, 1961 oder Kirk-Othmer, Encyclopedia of Chemical Technology, Vol. 1, Seiten 29611, J. Wiley, New York, 1978). Bevorzugt wird als Molekulargewichtsregler n-Dodecylmercaptan eingesetzt.

Gemäß der Erfindung sind in dem Verfahren zum Erhalten von I. die relativen Anteile aller Substanzen A) bis J) derart gewählt, dass man Kern-Schale-Schale-Teilchen mit einem Gesamtradius, gemessen nach dem Coulter-Verfahren im Bereich von > 125,0 nm und < 180 nm, vorzugsweise im Bereich von > 128,0 nm und < 160 nm, bevorzugt im Bereich von > 135,0 nm und < 150 nm, erhält.

Für die Zwecke der vorliegenden Erfindung ist es besonders vorteilhaft in dem Verfahren zum Erhalten von I., die relativen Anteile aller Substanzen A) bis J) derart zu wählen, dass das Gesamtgewicht der Substanzen A) bis J), bezogen auf das Gesamtgewicht der wässrigen Dispersion mindestens 30 Gew.-% ist und vorzugsweise zwischen 40 und 50 Gew.-% ist.

Dabei bezeichnet der Begriff "Koagulat" in diesem Zusammenhang wasserunlösliche Bestandteile, welche vorzugsweise durch Filtration der Dispersion zweckmäßigerweise über eine Filtermanschette mit eingespanntem Filtergewebe Nr. 0.90 DIN 4188 abfiltriert werden können. Das erfindungsgemäße Kern-Schale-Schale-Teilchen kann aus der Dispersion beispielsweise durch Sprühtrocknen, Gefrierkoagulation, Ausfällen durch Elektrolytzusatz oder durch mechanische oder thermische Belastung, wie sie gemäß DE 27 50 682 A1 oder US 4 110 843 mittels eines Entgasungsextruders durchführbar ist, gewonnen werden. Das Verfahren der Sprühtrocknung ist am gebräuchlichsten, obwohl die anderen genannten Verfahren den Vorzug haben, dass dabei die wasserlöslichen Polymerisationshilfsstoffe wenigstens teilweise von dem Polymerisat abgetrennt werden.

Die erste Zusammensetzung gemäß b) der Kern-Schale-Schale-Teilchen nach I. umfasst
A) 50,0 bis 99,9 Gew.-Teile, vorzugsweise 71,0 bis 99,9 Gew.-Teile, Alkylmethacrylate mit 1 bis 20, vorzugsweise 1 bis 12, insbesondere 1 bis 8, Kohlenstoffatomen im Alkylrest,
B) 0,0 bis 40,0 Gew.-Teile, vorzugsweise 0,0 bis 19,0 Gew.-Teile, Alkylacrylate mit 1 bis 20, vorzugsweise 1 bis 12, insbesondere 1 bis 8, Kohlenstoffatomen im Alkylrest,
C) 0,1 bis 10,0 Gew.- Teile vernetzende Monomere und
D) 0,0 bis 8,0 Gew.- Teile styrolische Monomere der allgemeinen Formel (I)

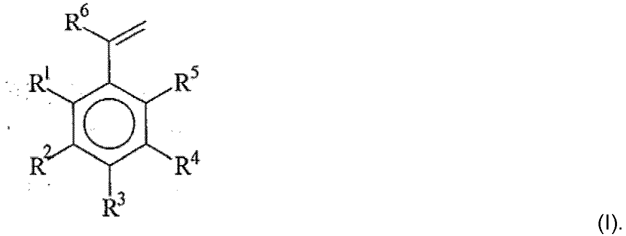

Die Reste R¹ bis R⁵ bezeichnen jeweils unabhängig voneinander Wasserstoff, ein Halogen, insbesondere Fluor, Chlor oder Brom, eine C₁₋₆-Alkylgruppe oder eine C₂₋₆-Alkenylgruppe, vorzugsweise Wasserstoff. Der Rest R⁶ kennzeichnet Wasserstoff oder eine Alkylgruppe mit 1 bis 6 Kohlenstoffatomen, vorzugsweise Wasserstoff. Besonders geeignete Alkylgruppen mit 1 bis 6 Kohlestoffatomen sind Methyl-, Ethyl-, n-Propyl-, iso-Propyl-, n-Butyl-, sec-Butyl-, tert-Butyl-, n-Pentyl-, n-Hexylgruppen sowie Cyclopentyl- und Cyclohexylgruppen.

Somit umfassen styrolische Monomere der allgemeinen Formel (I) Styrol, substituierte Styrole mit einem Alkylsubstituenten in der Seitenkette, wie beispielsweise α-Methylstyrol und α-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole.

In einer besonderen Ausführungsform der erfindungsgemäß einzusetzenden Kern-Schale-Schale-Teilchen nach I. umfasst die erste Zusammensetzung
A) 75,0 bis 99,9 Gew.-Teile, insbesondere 85,0 bis 99,8 Gew.-Teile, Alkylmethacrylate mit 1 bis 20, vorzugsweise 1 bis 12, insbesondere 1 bis 8, Kohlenstoffatomen im Alkylrest,
B) 0,0 bis 24,9 Gew.-Teile, insbesondere 0,1 bis 14,9 Gew.- Teile, Alkylacrylate mit 1 bis 20, vorzugsweise 1 bis 12, insbesondere 1 bis 8, Kohlenstoffatomen im Alkylrest,
C) 0,1 bis 5,0 Gew.-Teile, insbesondere 0,1 bis 2,0 Gew.-Teile, vernetzende Monomere und
D) 0,0 bis 8,0 Gew.-Teile styrolische Monomere der allgemeinen Formel (I),
wobei sich die angegebenen Gewichtsteile zu 100,0 Gew.-Teile addieren.

Erfindungsgemäß sind die Verbindungen A), B), C) und D) voneinander verschieden, insbesondere umfassen die Verbindungen A) und B) keine vernetzenden Monomere C).

Unter den oben erwähnten Alkylmethacrylaten (A) werden Ester der Methacrylsäure verstanden, beispielsweise Methylmethacrylat, Ethylmethacrylat, Propylmethacrylat, Isopropylmethacrylat, n-Butylmethacrylat, sec-Butylmethacrylat, tert-Butylmethacrylat, Pentylmethacrylat, Hexylmethacrylat, Heptylmethacrylat, Octylmethacrylat, 2-Octylmethacrylat, Ethylhexylmethacrylat, Nonylmethacrylat, 2-Methyl-octylmethacrylat, 2-tert-Butylheptylmethacrylat, 3-iso-Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylmethacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butyl-cyclohexylmethacrylat, Cycloheptylmethacrylat, Cyclooctylmethacrylat, Bornylmethacrylat und Isobornylmethacrylat.

Gemäß einer besonders bevorzugten Ausführungsform der vorliegenden Erfindung enthält die erste Zusammensetzung, bezogen auf das Gesamtgewicht der Komponenten A) bis D), mindestens 50 Gew.-%, zweckmäßigerweise mindestens 60 Gew.-%, vorzugsweise mindestens 75 Gew.-%, insbesondere mindestens 85 Gew.-% Methylmethacrylat.

Unter den oben erwähnten Alkylacrylaten (B) werden Ester der Acrylsäure verstanden, beispielsweise Methylacrylat, Ethylacrylat, Propylacrylat, Isopropylacrylat, n-Butylacrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyl-octylacrylat, 2-tert-Butylheptylacrylat, 3-iso-Propylheptylacrylat, Decylacrylat, Undecylacrylat, 5-Methylundecylacrylat, Dodecylacrylat, 2-Methyldodecylacrylat, Tridecylacrylat, 5-Methyltridecylacrylat, Tetradecylacrylat, Pentadecylacrylat, Hexadecylacrylat, 2-ethylhexadecylacrylat, Heptadecylacrylat, 5-iso-Propylheptadecylacrylat, 5-Ethyloctadecylacrylat, Octadecylacrylat, Nonadecylacrylat, Eicosylacrylat, Cycloalkylacrylate, wie beispielsweise Cyclopentylacrylat, Cyclohexylacrylat, 3-Vinyl-2-butyl-cyclohexylacrylat, Cycloheptylacrylat, Cyclooctylacrylat, Bornylacrylat und Isobornylacrylat.

Vernetzende Monomere (C) umfassen alle die Verbindungen, welche in der Lage sind, unter den vorliegenden Polymerisationsbedingungen eine Vernetzung herbeizuführen. Hierzu gehören insbesondere
(a) Difunktionelle (Meth)acrylate, vorzugsweise Verbindungen der allgemeinen Formel: 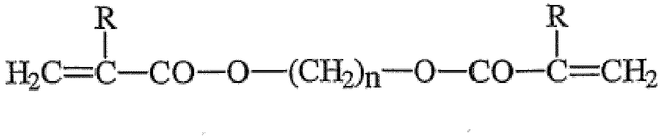 worin R Wasserstoff oder Methyl ist und n eine positive ganze Zahl größer gleich 2, vorzugsweise zwischen 3 und 20 bezeichnet, insbesondere Di(meth)acrylate des Propandiols, Butandiols, Hexandiols, Octandiols, Nonandiols, Decandiols und des Eicosandiols;
   Verbindungen der allgemeinen Formel: 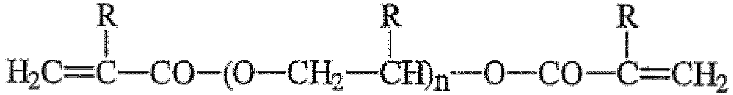 worin R Wasserstoff oder Methyl ist und n eine positive ganze Zahl zwischen 1 und 14 bedeutet, insbesondere Di(meth)acrylate des Ethylenglycols, Diethylenglycols, Triethylenglycols, Tetraethylenglycols, Dodecaethylenglycols, Tetradecaethylenglycols, Propylenglycols, Dipropylglycols und des Tetradecapropylenglycols;
   Glycerindi(meth)acrylat, 2,2'- Bis[p-(γ-methacryloxy-ß-hydroxypropoxy)-phenylpropan] oder Bis-GMA, Bisphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan;
(b) Tri- oder polyfunktionelle (Meth)acrylate, insbesondere Trimethylolpropantri(meth)acrylate und Pentaerythritoltetra(meth)acrylat.
(c) Pfropfvernetzer mit mindestens zwei unterschiedlich reaktiven C-C-Doppelbindungen, insbesondere Allylmethacrylat und Allylacrylat; und
(d) aromatische Vernetzer, insbesondere 1,2-Divinylbenzol, 1,3-Divinylbenzol und 1,4-Divinylbenzol.

Vorzugsweise erfolgt die Monomerauswahl bzw. die Auswahl der Gewichtsanteile der Monomere A) bis D) der ersten Zusammensetzung derart, dass das durch die Polymerisation der ersten Zusammensetzung erhältliche Polymer eine Glasübergangstemperatur Tg von mindestens 10°C, vorzugsweise von mindestens 30°C, aufweist. Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox-Gleichung näherungsweise voraus berechnet werden. Nach Fox T. G., Bull. Am. Physics Soc. 1, 3, Seite 123 (1956) gilt: 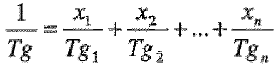 wobei xₙ für den Massebruch (Gew.-%/100) des Monomeren n steht und Tgₙ die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg-Werte für die geläufigsten Homopolymerisate angibt.

Erfindungsgemäß erfolgt bei konkreten Angaben in Folge, wenn nicht konkret anders angegeben, die Bestimmung mittels der Fox-Gleichung.

Die zweite Zusammensetzung gemäß c) der Kern-Schale-Schale-Teilchen nach I. umfasst
E) 80,0 bis 99,95 Gew.-Teile (Meth)acrylate,
F) 0,05 bis 5,0 Gew.-Teile vernetzende Monomere und
G) 0,0 bis 19,95 Gew.-Teile styrolische Monomere der allgemeinen Formel (I).

Erfindungsgemäß sind die Verbindungen E), F) und G) voneinander verschieden, insbesondere umfassen die Verbindungen E) keine vernetzenden Monomere F).

In einer besonderen Ausführungsform umfasst die zweite Zusammensetzung der Kern-Schale-Schale-Teilchen nach I.
E) 80,0 bis 91,9 Gew.-Teile (Meth)acrylate,
F) 0,1 bis 2,0 Gew.-Teile vernetzende Monomere und
G) 8,0 bis 19,9 Gew.-Teile styrolische Monomere der allgemeinen Formel (I),
wobei sich die angegebenen Gewichtsteile vorzugsweise zu 100,0 Gew.-Teile addieren.

Im Rahmen der vorliegenden Erfindung bezeichnen (Meth)acrylate Acrylate und Methacrylate sowie Mischungen aus beiden. Sie umfassen somit Verbindungen, welche mindestens eine Gruppe der folgenden Formel aufweisen 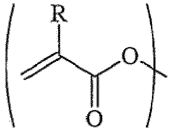 wobei R Wasserstoff oder einen Methylrest kennzeichnet. Zu ihnen gehören insbesondere die vorstehend genannten Alkylacrylate und Alkylmethacrylate. Weiterhin haben sich auch Arylalkylacrylate, insbesondere Benzyl-, Phenylethyl-, Phenylpropyl-, Phenylpentyl- und/oder Phenylhexylacrylat, für die Zwecke der vorliegenden Erfindung als besonders nützlich erwiesen. Sie werden vorzugsweise in einer Menge im Bereich von 0,1 bis 40,0 Gew.-%, bezogen auf das Gesamtgewicht der Komponenten E) und F), eingesetzt.

Die vernetzenden Monomere F) umfassen erfindungsgemäß die vorstehend genannten vernetzenden Monomere C).

Bevorzugt umfasst E) Alkylacrylate mit 3 bis 8 Kohlenstoffatomen im Alkylrest und/oder Alkylmethacrylate mit 7 bis 14 Kohlenstoffatomen im Alkylrest.

Im Rahmen einer ganz besonders bevorzugten Ausführungsform der vorliegenden Erfindung umfasst die zweite Zusammensetzung der Kern-Schale-Schale-Teilchen nach I.
E) 90,0 bis 99,9 Gew.-Teile Alkylacrylate mit 3 bis 8 Kohlenstoffatomen im Alkylrest und/oder Alkylmethacrylate mit 7 bis 14 Kohlenstoffatomen im Alkylrest, insbesondere Butylacrylat und/oder Dodecylmethacrylat,
F) 0,1 bis 2,1 Gew.-Teile vernetzende Monomere und
G) 0,0 bis 9,9 Gew.-Teile, vorzugsweise 8,0 bis 9,9 Gew.-Teile styrolische Monomere der allgemeinen Formel (I), wobei sich die Gewichtsteile vorzugsweise zu 100,0 Gew.-Teilen addieren.

Weiterhin erfolgt die Monomerauswahl bzw. die Auswahl der Gewichtsanteile der Monomere E), F) und G) der zweiten Zusammensetzung günstigerweise derart, dass das durch die Polymerisation der zweiten Zusammensetzung erhältliche Polymer eine Glasübergangstemperatur Tg kleiner 30°C, vorzugsweise kleiner 10°C, insbesondere im Bereich von 0 bis -75°C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden. Erfindungsgemäß erfolgt die Bestimmung über die Fox-Gleichung.

Die dritte Zusammensetzung gemäß d) der Kern-Schale-Schale-Teilchen nach I. umfasst H) 50,0 bis 100,0 Gew.-Teile Alkylmethacrylate mit 1 bis 20, vorzugsweise 1 bis 12, insbesondere 1 bis 8, Kohlenstoffatomen im Alkylrest,
I) 0,0 bis 40,0 Gew.-Teile Alkylacrylate mit 1 bis 20, vorzugsweise 1 bis 12, insbesondere 1 bis 8, Kohlenstoffatomen im Alkylrest und
J) 0,0 bis 10,0 Gew.-Teile styrolische Monomere der allgemeinen Formel (I).

Die dritte Zusammensetzung der Kern-Schale-Schale-Teilchen nach I. enthält in einer bevorzugten Ausführungsform H) 60,0 bis 100,0 Gew.-Teile, bevorzugt 77,0 bis 99,9 Gew.-Teile, insbesondere 85,0 bis 99,5 Gew.-Teile, Alkylmethacrylate mit 1 bis 20, vorzugsweise 1 bis 12, insbesondere 1 bis 8, Kohlenstoffatomen im Alkylrest,
I) 0,0 bis 30,0 Gew.-Teile, insbesondere 0,1 bis 15,0 Gew.- Teile, Alkylacrylate mit 1 bis 20, vorzugsweise 1 bis 12, insbesondere 1 bis 8, Kohlenstoffatomen im Alkylrest,
J) 0,0 bis 10,0 Gew.-Teile, vorzugsweise 0,0 bis 8,0 Gew.-Teile styrolische Monomere der allgemeinen Formel (I),
wobei sich die angegebenen Gewichtsteile vorzugsweise zu 100,0 Gew.-Teile addieren.

Gemäß einer besonders bevorzugten Ausführungsform der vorliegenden Erfindung enthält die dritte Zusammensetzung der Kern-Schale-Schale-Teilchen nach I., bezogen auf das Gesamtgewicht der Komponenten H) bis J), mindestens 50 Gew.-%, zweckmäßigerweise mindestens 60 Gew.-%, vorzugsweise mindestens 75 Gew.-%, insbesondere mindestens 85 Gew.-% Methylmethacrylat.

Weiterhin erfolgt die Monomerauswahl bzw. die Auswahl der Gewichtsanteile der Monomere H), I) und J) der dritten Zusammensetzung günstigerweise derart, dass das durch die Polymerisation der dritten Zusammensetzung erhältliche Polymer eine Glasübergangstemperatur Tg von mindestens 10°C, vorzugsweise von mindestens 30°C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden. Wenn nicht anders angegeben erfolgt die Ermittlung mittels der Fox-Gleichung.

Das Kern-Schale-Schale-Teilchen I. dient zur Verbesserung der Schlagzähigkeit von harten thermoplastischen Kunststoffen, die mit der Hartphase verträglich sind, vorzugsweise in den erfindungsgemäßen Formmassen, wie Poly(meth)acrylat-Formmassen, insbesondere Polymethylmethacrylat.

Bevorzugt umfasst das mindestens eine (Meth)acrylpolymer gemäß II., jeweils bezogen auf sein Gesamtgewicht,
a) 52,0 bis 100,0 Gew.-% Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,
b) 0,0 bis 40,0 Gew.-% Alkylacrylat-Wiederholungseinheiten mit 1 bis 20, vorzugsweise 1 bis 12, zweckmäßigerweise 1 bis 8, insbesondere bis 4, Kohlenstoffatomen im Alkylrest und
c) 0,0 bis 8,0 Gew.-% styrolische Wiederholungseinheiten der allgemeinen Formel (I),
wobei sich die Gewichtsprozente zu 100,0 Gew.-% addieren.

Besonders bevorzugt umfasst das mindestens eine (Meth)acrylpolymer gemäß II., jeweils bezogen auf sein Gesamtgewicht,
a) 68,0 bis 100,0 Gew.-%, besonders bevorzugt 75,0 bis 99,9 Gew.-%, insbesondere 85,0 bis 99,5 Gew.-%, Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,
b) 0,0 bis 25,0 Gew.-%, besonders bevorzugt 0,1 bis 17,0 Gew.-%, insbesondere 0,5 bis 15,0 Gew.- %, Alkylacrylat-Wiederholungseinheiten mit 1 bis 20, vorzugsweise 1 bis 12, zweckmäßigerweise 1 bis 8, insbesondere bis 4, Kohlenstoffatomen im Alkylrest und
c) 0,0 bis 8,0 Gew.-% styrolische Wiederholungseinheiten der allgemeinen Formel (I), wobei sich die Gewichtsprozente zu 100,0 Gew.-% addieren.

Gemäß einer weiteren besonders bevorzugten Ausführungsform der vorliegenden Erfindung enthält das mindestens eine (Meth)acrylpolymer gemäß II., bezogen auf sein Gesamtgewicht, mindestens 50,0 Gew.-%, zweckmäßigenweise mindestens 60,0 Gew.-%, vorzugsweise mindestens 75,0 Gew.-%, insbesondere mindestens 85,0 Gew.-% Methylmethacrylat-Wiederholungseinheiten.

Nach einer weiteren ebenso bevorzugten Ausführungsform der vorliegenden Erfindung enthält das mindestens eine (Meth)acrylpolymer gemäß II. ≤ 8 Gew.-% Alkylacrylat-Wiederholungseinheiten mit 1 bis 20 Kohlenstoffatomen im Alkylrest, bevorzugt ≤ 6 Gew.-% , weiter bevorzugt ≤ 4 Gew.-%, ganz bevorzugt ≤ 2 Gew.-%, ganz besonders bevorzugt ≤ 1 Gew.-%, jeweils bezogen auf das Gesamtgewicht von dem (Meth)acrylpolymer gemäß II. Besonders bevorzugt handelt es sich bei den Alkylacrylat-Wiederholungseinheiten um Methylacrylat- Wiederholungseinheiten.

Weiterhin weist das mindestens eine (Meth)acrylpolymer gemäß II. vorzugsweise ein Zahlenmittel des Molekulargewichtes im Bereich von 10.000 bis 1.000.000 g/mol, vorzugsweise im Bereich von 50.000 bis 500.000 g/mol, insbesondere im Bereich von 60.000 bis 100.000 g/mol auf. Dabei kann das Molekulargewicht, beispielsweise mittels Gelpermeationschromatographie unter Kalibrierung mit einem Polystyrol-Standard ermittelt werden.

Ganz besonders bevorzugt umfasst der Bestandteil II. zwei oder mehr unterschiedliche (Meth)acrylpolymere. Insbesondere bevorzugt ist, dass bei dem Vorliegen von mindestens einem weiteren (Meth)acrylpolymer dieses (Meth)acrylpolymer niedermolekular ist. Besonders bevorzugt ist, wenn das niedermolekulare (Meth)acrylpolymer ein Zahlenmittel des Molekulargewichtes im Bereich von 1.000 bis 70.000 g/mol, vorzugsweise im Bereich von 5.000 bis 60.000 g/mol, besitzt. Das niedermolekulare (Meth)acrylpolymer kann einen Anteil von 2-20 Gew.-%, vorzugsweise von 5 - 10 Gew.-%, bezogen auf das Gesamtgewicht des (Meth)acrylpolymers II., ausmachen. Mit dem anteiligen Zusetzen eines niedermolekularen (Meth)acrylpolymers wird die Verarbeitbarkeit der im gesamten erzielten Formmasse im Spritzguss oder im Spritzprägen verbessert. Dem Fachmann sind gängige Fließverbesserer in der Form von niedermolekularen (Meth)acrylpolymeren bekannt.

Bevorzugt kann das mindestens eine (Meth)acrylpolymer gemäß II. auch als mindestens ein Copolymer, vorzugsweise als mindestens ein Hoch-Tg-Copolymer, vorliegen. Unter "Hoch-Tg" wird im Sinne der vorliegenden Erfindung verstanden, dass das Hoch-Tg-Copolymer eine höhere Tg (Glasübergangstemperatur) als Polymethylmethacrylat, vorzugsweise mindestens 110°C, bevorzugt mindestens 115°C, weiter bevorzugt mindestens 120°C, und besonders bevorzugt sogar mindestens 125°C, gemessen gemäß Differentialrasterkalorimetrie unter Stickstoff-Atmosphäre nach ISO 11357. Eine "Hoch-Tg"-Zusammensetzung kann entweder sein a) ein "Hoch-Tg"-Copolymer aus Methylmethacrylat und mindestens einem anderen Monomer, wobei das resultierende Copolymer eine Tg größer als die des Polymethylmethacrylats von ca. 105°C aufweist, oder b) eine Mischung aus einem (Meth)acrylpolymer und mindestens einem mischbaren, halb mischbaren oder kompatiblen Polymer, wobei bei einem mischbaren Polymer die Gesamt-Tg oder bei einem halb mischbaren Polymer mindestens eine der Tg größer als 110°C ist, oder c) Polymethylmethacrylat mit einem höheren Grad an Syndiotaktizität als statistisch polymerisiertes PMMA.

Geeignete Monomere, die in einem Copolymer eine höhere Tg verleihen können, umfassen, sind aber nicht beschränkt auf, Methacrylsäure, Acrylsäure, Itaconsäure, substituierte Styrole, Alpha-Methylstyrol, Maleinsäureanhydrid, Isobornylmethacrylat, Norbornyl-methacrylat, t-Butylmethacrylat, Cyclohexylmethacrylat, substituierte Cyclohexylmethacrylate, Vinylcyclohexan, Phenylmethacrylate, Acrylamide, N-Isopropylacrylamid, Methacrylamide, substituierte Maleimide, Glutarimide und Maleimide.

In einer bevorzugten Ausführungsform enthält die erfindungsgemäße Formmasse bis zu 45 Gew.-% Styrol-Acrylnitril-Copolymere gemäß III., insbesondere 1,0 bis 45 Gew.-%, bezogen auf das Gesamtgewicht der Formmasse. Besonders bevorzugt sind die Styrol-Acrylnitril-Copolymere gemäß III. durch Polymerisation einer Mischung erhalten und/oder erhältlich, die aus
70 bis 92 Gew.-% Styrol
8 bis 30 Gew.-% Acrylnitril und
0 bis 22 Gew.-% weiterer Comonomere, jeweils bezogen auf das Gesamtgewicht der Mischung, besteht.

Die erfindungsgemäßen Formmassen können weitere Zusatzstoffe gemäß IV., insbesondere Polymere, enthalten, um die Eigenschaften in geeigneter Weise zu modifizieren.

Übliche Zusatzstoffe gemäß IV. können in jeder dazu geeigneten Verarbeitungsstufe zugemischt werden. Zu diesen üblichen Zusatzstoffen zählen u. a. Farbstoffe, Pigmente, Füllstoffe, Verstärkungsfasern, Gleitmittel, UV-Schutzmittel usw.

Bezogen auf das Gesamtgewicht der erfindungsgemäßen Formmasse kann diese Formmasse 0,1 bis 10,0 Gew.-%, vorzugsweise 0,5 bis 5,0 Gew.-%, insbesondere 1,0 bis 4,0 Gew.-%, eines weiteren Polymerisates (AP) als Zusatzstoff gemäß IV. enthalten, welches im Vergleich mit dem mindestens einen (Meth)acrylpolymer gemäß II., ein um mindestens 10 %, vorzugsweise mindestens 50 %, insbesondere mindestens 100 %, höheres Gewichtsmittel des Molekulargewichtes aufweist. Dabei kann das Molekulargewicht, beispielsweise mittels Gelpermeationschromatographie unter Kalibrierung mit einem Polystyrol-Standard ermittelt werden.

Erfindungsgemäß besonders geeignete Polymerisate (AP) umfassen, jeweils bezogen auf ihr Gesamtgewicht, vorzugsweise
a) 52,0 bis 100,0 Gew.-%, zweckmäßigerweise 60,0 bis 100,0 Gew.-%, besonders bevorzugt 75,0 bis 99,9 Gew.-%, insbesondere 85,0 bis 99,5 Gew.-%, Alkylmethacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest,
b) 0,0 bis 40,0 Gew.-%, zweckmäßigerweise 0,0 bis 32,0 Gew.-%, besonders bevorzugt 0,1 bis 17,0 Gew.-%, insbesondere 0,5 bis 7,0 Gew.- %, Alkylacrylat-Wiederholungseinheiten mit 1 bis 20, vorzugsweise 1 bis 12, zweckmäßigerweise 1 bis 8, insbesondere 1 bis 4, Kohlenstoffatomen im Alkylrest und
c) 0,0 bis 8,0 Gew.-% styrolische Wiederholungseinheiten der allgemeinen Formel (I),
wobei sich die Gewichtsprozente zu 100,0 Gew.-% addieren.

Gemäß einer besonders bevorzugten Ausführungsform der vorliegenden Erfindung enthält das Polymerisat (AP), bezogen auf sein Gesamtgewicht, mindestens 50,0 Gew.-%, zweckmäßigerweise mindestens 60,0 Gew.-%, vorzugsweise mindestens 75,0 Gew.-%, insbesondere mindestens 85,0 Gew.-% Methylmethacrylat-Wiederholungseinheiten.

Weiterhin weist das Polymerisat (AP) vorzugsweise ein Gewichtsmittel des Molekulargewichtes im Bereich von 10.000 bis 100.000.000 g/mol, vorzugsweise im Bereich von 50.000 bis 5.000.000 g/mol, zweckmäßigerweise im Bereich von 100.000 bis 1.000.000 g/mol, insbesondere im Bereich von 250.000 bis 600.000 g/mol auf. Dabei kann das Molekulargewicht, beispielsweise mittels Gelpermeationschromatographie unter Kalibrierung mit einem Polystyrol-Standard ermittelt werden.

Andere geeignete Polymerisate (AP) sind Polyacrylnitrile, Polystyrole, Polyether, Polyester, Polycarbonate, Polyttetrafluorethylen und Polyvinylchloride. Die Polymere können einzeln oder als Mischung eingesetzt werden.

Die erfindungsgemäße Formmasse kann auf verschiedene Weise hergestellt werden. Man kann beispielsweise die Dispersion des Kern-Schale-Schale-Teilchens I. mit einer wässrigen Dispersion der Abmischkomponente vermischen und die Mischung koagulieren, die Wasserphase abtrennen und das Koagulat zu einer Formmasse verschmelzen. Bei diesem Verfahren lässt sich eine besonders gleichmäßige Vermischung der beiden Massen erzielen. Die Komponenten können auch getrennt hergestellt und isoliert und in Form ihrer Schmelzen oder als Pulver oder Granulate gemischt und in einem Mehrschneckenextruder oder auf einem Walzenstuhl homogenisiert werden.

Bevorzugt weist die erfindungsgemäße Formmasse Folgendes auf:
a. eine Charpy-Schlagzähigkeit nach ISO 179 von mindestens 40,0 kJ/m², vorzugsweise von mindestens 60,0 kJ/m², bevorzugt von mindestens 80,0 kJ/m² bei 23°C, und
b. einen Haze nach ASTM D 1003 (1997) von ≤ 3% bei 23 °C, bevorzugt von ≤ 2% bei 23 °C, weiter bevorzugt von ≤ 1,5% bei 23 °C, ganz bevorzugt von ≤ 1,0% bei 23 °C, und einen Haze nach ASTM D 1003 (1997) von ≤ 21% bei 80 °C, bevorzugt von ≤ 20% bei 80 °C, weiter bevorzugt von ≤ 18% bei 80 °C, ganz bevorzugt von ≤ 16% bei 80 °C, und
c. eine Vicat-Erweichungstemperatur nach DIN ISO 306 (Aug. 1994) von ≥ 98°C, vorzugsweise ≥ 99°C, bevorzugt ≥ 100°C, ganz bevorzugt ≥ 102°C, und
d. eine Schmelzevolumenrate (MVR) nach ISO 1133 (230°C; 3,8 Kg) von ≥ 1,5 cm³/10min, bevorzugt von ≥ 2,0 cm³/10min, weiter bevorzugt von ≥ 2,5 cm³/10min.

Im Rahmen der vorliegenden Erfindung erfolgt eine Haze-Bestimmung der erfindungsgemäßen Formmassen immer an 3 mm Spritzguß-Formkörpern.

Ein weiterer Gegenstand dieser Anmeldung ist ein Formartikel, der aus der erfindungsgemäßen Formmasse erhältlich ist.

Die erfindungsgemäße Formmasse eignet sich insbesondere zur Herstellung von Formartikeln, zweckmäßigerweise mit einer Wanddicke über 1 mm, wie extrudierten Bahnen von 1 bis 10 mm Dicke, die sich gut stanzen lassen und beispielsweise zur Herstellung bedruckbarer Blenden für Elektrogeräte brauchbar sind, oder zur Herstellung von gespritzten Formkörpern hoher Qualität, z. B. Kraftfahrzeugscheiben. Dünnere Folien mit einer Dicke von z.B. 50 µm können ebenfalls daraus hergestellt werden.

Bevorzugt weist der erfindungsgemäße Formartikel Folgendes auf:
a. eine Charpy-Schlagzähigkeit nach ISO 179 von mindestens 40,0 kJ/m², vorzugsweise von mindestens 60,0 kJ/m², bevorzugt von mindestens 80,0 kJ/m² bei 23°C, und
b. einen Haze nach ASTM D 1003 (1997) von ≤ 3% bei 23 °C, bevorzugt von ≤ 2% bei 23 °C, weiter bevorzugt von ≤ 1,5% bei 23 °C, ganz bevorzugt von ≤ 1,0% bei 23 °C, und einen Haze nach ASTM D 1003 (1997) von ≤ 21% bei 80 °C, bevorzugt von ≤ 20% bei 80 °C, weiter bevorzugt von ≤ 18% bei 80 °C, ganz bevorzugt von ≤ 16% bei 80 °C, und
c. eine Vicat-Erweichungstemperatur nach DIN ISO 306 (Aug. 1994) von ≥ 98°C, vorzugsweise ≥ 99°C, bevorzugt ≥ 100°C, ganz bevorzugt ≥ 102°C, und
d. eine Schmelzevolumenrate (MVR) nach ISO 1133 (230°C; 3,8Kg) von ≥ 1,5 cm³/10min, bevorzugt von ≥ 2,0 cm³/10min, weiter bevorzugt von ≥ 2,5 cm³/10min.

Im Rahmen der vorliegenden Erfindung erfolgt eine Haze-Bestimmung der erfindungsgemäßen Formartikel an hergestellten 3 mm Spritzguß-Formkörpern (die Spritzguß-Formkörper werden erhalten, indem der Formartikel regranuliert und anschließend zu dem erforderlichen Formkörper spritzgegossen wird).

Aufgrund der überraschenderweise gefundenen Eigenschaften einer deutlich reduzierten Haze-Zunahme bei erhöhter Temperatur eignen sich die Produkte insbesondere für Anwendungen, wie Beleuchtung und Verscheibungen. Bei Einsatz der Produkte in Beleuchtungsanwendungen mit Signaleinfärbungen ist keine Farbortverschiebung aufgrund einer Trübungszunahme zu erwarten.

Ein weiteres Einsatzgebiet für die erfindungsgemäß schlagzäh modifizierte Formmasse ist für Automobilverscheibungen gegeben. Es werden die Anforderungen nach Zähigkeit in Kombination mit Wäremeformbeständigkeit und optischen Eigenschaften wie hohe Transparenz bei sehr niedriger Haze selbst bei erhöhten Temperaturen erfüllt.

Die Erfindung betrifft daher weiterhin die Verwendung der erfindungsgemäßen Formmasse sowie die Verwendung des erfindungsgemäßen Formartikels.

Insbesondere betrifft die Erfindung die Verwendung der erfindungsgemäßen Formmasse zur Herstellung von großen und/oder dünnwändigen Bauteilen im Spritzguß und zur Herstellung von Verscheibungen/Verglasungen (wie z.B. Abdeckscheiben für Fahrzeugbeleuchtungen, d.h. Scheinwerfern oder Rückleuchten; eingefärbte Abdeckgläser für Automobilleuchten; weitere vielseitige Beleuchtungsanwendungen für Gebäude- Innen und/oder Außenbeleuchtungen, die insbesondere hohen Anforderungen hinsichtlich Vandalismus, Temperaturbeständigkeit und guter Verarbeitbarkeit entsprechen müssen).

Die Herstellung der genannten Formteile mit Spritzgieß- oder Spritzprägeverfahren erfordert aufgrund der oft großformatigen Abmessungen und geringen Wandstärken insbesondere häufig gute Fließeigenschaften der geschmolzenen Formmasse.

Die Verwendung der erfindungsgemäßen Formmasse zur Herstellung von den erwähnten eingefärbten Abdeckgläser für Automobilleuchten ist insbesondere relevant, da diese eingefärbten Abdeckgläser reglementierten gesetzlichen Anforderungen zu Farborten gemäß SAE und ECE erfüllen müssen.

Weiterhin betrifft die Erfindung die Verwendung der erfindungsgemäßen Formmasse zur Herstellung von Displays für Kommunikationsgeräte, insbesondere PDAs, Mobiltelefone, Handys, vorzugsweise Smartphones; Tablet-PCs; TV-Geräte; Küchengeräte und andere elektronische Geräte.

Insbesondere bevorzugt betrifft die Erfindung die Verwendung der erfindungsgemäßen Formmasse zur Herstellung von großen und/oder dünnwändigen Bauteilen im Spritzguß, die mit heißen Medien und/oder Wärmestrahlung in Kontakt kommen (z.B. Lichtkuppeln) und die aus diesem Grund hohe Anforderungen, insbesondere hinsichtlich der Temperaturbeständigkeit, erfüllen müssen.

Insbesondere betrifft die Erfindung weiterhin die Verwendung des erfindungsgemäßen Formartikels als schlagzähe und große und/oder dünnwändige Bauteile aus Spritzguß, Verscheibungen/Verglasungen (wie z.B. Abdeckscheiben für Fahrzeugbeleuchtungen, d.h. Scheinwerfern oder Rückleuchten; eingefärbte Abdeckgläser für Automobilleuchten; weitere vielseitige Beleuchtungsanwendungen für Gebäude- Innen und/oder Außenbeleuchtungen, die insbesondere hohen Anforderungen hinsichtlich Vandalismus, Temperaturbeständigkeit und guter Verarbeitbarkeit entsprechen müssen).

Weiterhin betrifft die Erfindung die Verwendung des erfindungsgemäßen Formartikels als Displays für Kommunikationsgeräte, insbesondere PDAs, Mobiltelefone, Handys, vorzugsweise Smartphones; Tablet-PCs; TV-Geräte; Küchengeräte und andere elektronische Geräte.

Die nachfolgenden Beispiele sollen die Erfindung näher erläutern.

### Beispiele

### Kern-Schale-Schale-Teilchen I. (VB1-3 und B1-3)

### Herstellung des Saatlatex

Ein Saatlatex wurde mittels Emulsionspolymerisation einer Monomerzusammensetzung enthaltend 98 Gew.-% Ethylacrylat und 2 Gew.-% Allylmethacrylat hergestellt. Diese im Durchmesser ca. 20 nm großen Partikel lagen zu ca. 10 Gew.-% in Wasser vor.

### Herstellung der Kern-Schale-Schale-Teilchen

Alle im Folgenden beschriebenen Kern-Schale-Schale-Teilchen wurden mittels Emulsionspolymerisation gemäß der nachfolgenden Herstellungsvorschrift A (erfindungsgemäße Beispiele B1, B2, B3 und Vergleichsbeispiel VB1) bzw. der nachfolgenden Herstellungsvorschrift B (Vergleichsbeispiel VB2 und VB3) hergestellt. Dabei wurden die in Tabelle 1 angegebenen Emulsionen (i) bis (iii) eingesetzt.

### Beispiele B1, B2, B3 und Vergleichsbeispiel VB1

### Herstellung der Kern-Schale-Schale-Teilchen durch Herstellungsverfahren A

Bei 83°C (Kessel-Innentemperatur) wurden unter Rühren 1,711 kg Wasser in einem Polymerisationskessel vorgelegt. Es erfolgte eine Zugabe von 1,37 g Natriumcarbonat und Saatlatex. Anschließend wurde die Emulsion (i) über 1 h zudosiert. 10 min nach Zulaufende der Emulsion (i) wurde die Emulsion (ii) über einen Zeitraum von ca. 2 h zudosiert. Anschließend wurde ca. 60 min nach Zulaufende der Emulsion (ii) Emulsion (iii) über einen Zeitraum von ca. 1 h zudosiert. 30 min nach Zulaufende der Emulsion (iii) wurde auf 30°C abgekühlt.

Zur Separation der Kern-Schale-Schale-Teilchen wurde die Dispersion über 2 Tage bei -20°C eingefroren, danach wieder aufgetaut und die koagulierte Dispersion über ein Filtergewebe abgetrennt. Die Trocknung des Feststoffs erfolgte bei 50°C im Trockenschrank (Dauer: ca. 3 Tage). Die Teilchengröße der Kern-Schale-Schale-Teilchen (s. Tabelle 2) wurde mit Hilfe eines Nano-Sizer© N5 von Coulter bestimmt, wobei die Partikel in Dispersion vermessen wurden.

### Vergleichsbeispiele VB2 und VB3

### Herstellung der Kern-Schale-Schale-Teilchen durch Herstellungsverfahren B

Bei 52°C (Kessel-Innentemperatur) wurden unter Rühren 1,711 kg Wasser in einem Polymerisationskessel vorgelegt und 0,10 g Essigsäure, 0,0034 g Eisen(II)sulfat, 0,69 g Natriumdisulfit sowie der Saatlatex zugegeben. Anschließend wurde die Emulsion (i) über 1,5 h zudosiert. 10 min nach Zulaufende der Emulsion (i) wurde 7,46 g Natriumdisulfit gelöst in 100 g Wasser zugegeben und die Emulsion (ii) über einen Zeitraum von ca. 2,5 h zudosiert. Anschließend wurden ca. 30 min nach Zulaufende der Emulsion (ii) 0,62 g Natriumdisulfit gelöst in 50 g Wasser zugegeben und die Emulsion (iii) wurde über einen Zeitraum von ca. 1,5 h zudosiert. 30 min nach Zulaufende der Emulsion (iii) wurde auf 30°C abgekühlt.

Zur Separation der Kern-Schale-Schale-Teilchen wurde die Dispersion über 2 Tage bei -20°C eingefroren, danach wieder aufgetaut und die koagulierte Dispersion über ein Filtergewebe abgetrennt. Die Trocknung des Feststoffs erfolgte bei 50°C im Trockenschrank (Dauer: ca. 3 Tage). Die Teilchengröße der Kern-Schale-Schale-Teilchen (s. Tabelle 2) wurde mit Hilfe eines Nano-Sizer© N5 von Coulter bestimmt, wobei die Partikel in Dispersion vermessen wurden.

**Tabelle 1: Zusammenfassung der einzelnen Emulsionen (alle Angaben in [g])**

| | **B1** | **B2** | **B3** | **VB1** | **VB2** | **VB3** |
|---|---|---|---|---|---|---|
| Saatlatex | 15,00 | 12,00 | 5,00 | 28,00 | 5,00 | 13,00 |
| | | | | | | |

| **Emulsion (i)** | | | | | | |
|---|---|---|---|---|---|---|
| Wasser | 878,70 | 878,70 | 878,70 | 878,70 | 732,69 | 732,69 |
| Natriumpersulfat | 0,70 | 0,70 | 0,70 | 0,70 | 0,51 | 0,51 |
| Aerosol OT75 | 5,60 | 5,60 | 5,60 | 5,60 | 4,67 | 4,67 |
| Methylmethacrylat | 1071,62 | 1071,62 | 1071,62 | 1071,62 | 703,47 | 703,47 |
| Ethylacrylat | 44,74 | 44,74 | 44,74 | 44,74 | 29,40 | 29,40 |
| Allylmethacrylat | 2,24 | 2,24 | 2,24 | 2,24 | 2,21 | 2,21 |
| | | | | | | |

| **Emulsion (ii)** | | | | | | |
|---|---|---|---|---|---|---|
| Wasser | 606,90 | 606,90 | 606,90 | 606,90 | 628,65 | 628,65 |
| Natriumpersulfat | 1,58 | 1,58 | 1,58 | 1,58 | 1,44 | 1,44 |
| AerosolOT75 | 7,20 | 7,20 | 7,20 | 7,20 | 7,46 | 7,46 |
| Butylacrylat | 1160,63 | 1160,63 | 1160,63 | 1160,63 | 1219,72 | 1219,72 |
| Styrol | 256,00 | 256,00 | 256,00 | 256,00 | 262,87 | 262,87 |
| Allylmethacrylat | 21,57 | 21,57 | 21,57 | 21,57 | 19,53 | 19,53 |
| | | | | | | |

| **Emulsion (iii)** | | | | | | |
|---|---|---|---|---|---|---|
| Wasser | 404,30 | 404,30 | 404,30 | 404,30 | 381,56 | 381,56 |
| Natriumpersulfat | 0,70 | 0,70 | 0,70 | 0,70 | 0,44 | 0,44 |
| Aerosol OT75 | 1,08 | 1,08 | 1,08 | 1,08 | 1,34 | 1,34 |
| Methylmethacrylat | 614,27 | 614,27 | 614,27 | 614,27 | 920,45 | 920,45 |
| Ethylacrylat | 24,93 | 24,93 | 24,93 | 24,93 | 38,35 | 38,35 |

### Abmischung der Formmassen

### Beispiele 4, 5, 7, 8 und 10 sowie Vergleichsbeispiele 1, 2, 3, 6, 9, 11, 12 und 13

Eine Grund-Formmasse auf Polymethylmethacrylat-Basis, PLEXIGLAS® 7N bzw. PLEXIGLAS® 8N (Fa. Evonik Industries AG, Darmstadt), wurde mit einem der jeweiligen Kern-Schale-Schale-Teilchen B1-B3 bzw. VB1-VB3 mittels Extruder in unterschiedlichen Verhältnissen in der Schmelze abgemischt, wobei die eingesetzte Grund-Formmasse jeweils dem (Meth)acrylpolymeren II. entsprach.

Die Bestandteile der jeweiligen Mischung wurden 3 Minuten mittels eines Taumelmischers intensiv gemischt und dann in den Trichter eines Einschneckenextruder Stork mit 35 mm Schneckendurchmesser gegeben. Bei einer Schmelzetemperatur von 235°C wurden die Komponenten extrudiert, aus der Extruderdüse Stränge abgezogen, im Wasserbad gekühlt und zu Gleichkorngranulat geschnitten.

Vom erhaltenen Granulat wurden auf einer Spritzgießmaschine Battenfeld BA 500 Probekörper gemäß ISO 294 spritzgegossen. Zur Bestimmung der Schlagzähigkeit wurden ISO-Probekörper der Abmessung 80 mm x 10 mm x 4 mm bei 250 °C spritzgegossen. Zur Bestimmung optischer Eigenschaften wurden Plättchen der Ausmaße 65 mm x 40 mm x 3 mm bei 250 °C (oberhalb Schmelzetemperatur) spritzgegossen.

Die Zusammensetzungen der einzelnen Beispiele und Vergleichsbeispiele sind in Tabelle 2 dokumentiert.

### Prüfung der Formmassen und daraus hergestellten Prüfkörper

Die Formmassen bzw. die entsprechenden Prüfkörper wurden gemäß den folgenden Messmethoden geprüft:
- Vicat-Erweichungstemperatur (B50, 16 h/80°C): DIN ISO 306 (Aug. 1994)
- Charpy-Schlagzähigkeit: ISO 179 (1993)
- E-Modul: ISO 527-2
- Transmission (D 65/10°): DIN 5033/5036
- Haze (Hazemeter BYK Gardner Hazegard-plus): ASTM D 1003 (1997)
- MVR (230°C, 3,8Kg): ISO 1133

Die Ergebnisse der Prüfungen sind in Tabelle 2 zu sehen. Man erkennt eindeutig die Vorteile der erfindungsgemäßen Abmischungen gegenüber den herkömmlich schlagzähmodifizierten Formmassen der Vergleichsbeispiele. Die erfindungsgemäßen Abmischungen weisen z.B. auch bei höherer Temperatur (80°C) niedrige Haze-Werte, bestimmt nach ASTM D1003, auf. Die erfindungsgemäßen Formmassen bieten weiter eine im Vergleich zu den Vergleichsbeispielen hohe Schlagzähigkeit, ohne andere wichtige Eigenschaften der Formmassen, insbesondere die Vicat-Erweichungstemperatur, die Schmelzevolumenrate und den E-Modul, zu verschlechtern. Teilweise sind die diesbezüglich erhaltenen Werte sogar gegenüber den bekannten Formmassen verbessert.

**Tabelle 2: Prüfergebnisse der schlagzähmodifizierten Formmassen (als Formmasse wurde bis auf Bsp.4 Plexiglas® 7N benutzt; in Bsp. 4 wurde als Formmasse Plexiglas® 8N benutzt)**

| | Vgl.Bsp.1 | Vgl.Bsp.2 | Vgl.Bsp.3 | Bsp.4 | Bsp. 5 | Vgl.Bsp.6 | Bsp. 7 | Bsp. 8 | Vgl.Bsp.9 | Bsp.10 | Vgl.Bsp. 11 | Vgl.Bsp. 12 | Vgl.Bsp. 13 |
|---|---|---|---|---|---|---|---|---|---|---|---|---|---|
| Kern-Schale-Schale-Teilchen | VB1 | VB1 | B1 | B1 | B1 | B2 | B2 | B2 | B3 | B3 | VB2 | VB2 | VB3 |
| Anteil KSS-Teilchen in Formmasse [Gew.-%] | 38% | 20% | 38% | 33% | 20% | 38% | 27% | 20% | 38% | 20% | 38% | 20% | 20% |
| Teilchenradius [nm] | 101 | 101 | 129 | 129 | 129 | 145 | 145 | 145 | 165 | 165 | 165 | 165 | 134 |
| Formmasse | 7N | 7N | 7N | 8N | 7N | 7N | 7N | 7N | 7N | 7N | 7N | 7N | 7N |
| Vicat [°C] | 97,9 | 103,1 | 96,5 | 102 | 102,9 | 96,2 | 100,9 | 102,4 | 97 | 101,8 | 99,6 | 100,6 | 102,5 |
| Charpy-SZ bei 23°C [kJ/m²] | 91,5 | 28,4 | 114,5 | 103,9 | 63,2 | 123,6 | 105,3 | 85,3 | 130,1 | 90,9 | 95,9 | 57,4 | 34,8 |
| Lichttransmission [%] | 91,5 | 90,1 | 91,4 | 90,5 | 90,9 | 91,5 | 90,8 | 91,5 | 89,7 | 91,5 | 91 | 90,8 | 91,2 |
| Haze bei 23 °C [%] | 0,68 | 1,6 | 1 | 0,9 | 0,6 | 1,1 | 1 | 0,9 | 2,2 | 1,2 | 1,9 | 1,5 | 0,69 |
| Haze bei 80°C [%] | 3,71 | 6,2 | 10,2 | 9,6 | 7,8 | 12,5 | 14,3 | 11,7 | 22,1 | 17,6 | 22,4 | 19,2 | 8,7 |
| E-Modul [MPa] | 1943 | 2664 | 1898 | 2071 | 2560 | 1610 | 2257 | 2610 | 1819 | 2412 | 1828 | 2384 | 2616 |
| MVR [cm³/10min] | 1,59 | 3,28 | 1,34 | 1,57 | 3,21 | 1,4 | 2,95 | 3,58 | 1,67 | 3,39 | 1,83 | 3,47 | 3,24 |

## Patentansprüche

1. Formmasse enthaltend jeweils bezogen auf ihr Gesamtgewicht:
I. 10,0 bis ≤ 35,0 Gew.-%, vorzugsweise 12,0 bis 33,0 Gew.-%, weiter bevorzugt 14,0 bis 30 Gew.-%, ganz bevorzugt 15,0 bis 25,0 Gew.-%, mindestens eines Kern-Schale-Schale-Teilchens hergestellt oder herstellbar nach einem Verfahren bei welchem man
a) Wasser und Emulgator vorlegt,
b) 20,0 bis 45,0 Gew.-Teile einer ersten Zusammensetzung enthaltend:
A) 50,0 bis 99,9 Gew.- Teile, vorzugsweise 71,0 bis 99,9 Gew.- Teile, Alkylmethacrylate mit 1 bis 20 Kohlenstoffatomen im Alkylrest,
B) 0,0 bis 40,0 Gew.-Teile, vorzugsweise 0,0 bis 29,0 Gew.- Teile, Alkylacrylate mit 1 bis 20 Kohlenstoffatomen im Alkylrest,
C) 0,1 bis 10,0 Gew.- Teile vernetzende Monomere und
D) 0,0 bis 8,0 Gew.- Teile styrolische Monomere der allgemeinen Formel (I) 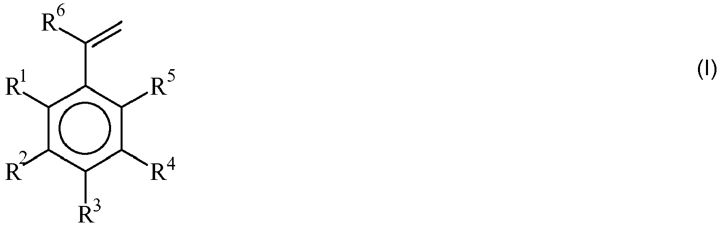 wobei die Reste R¹ bis R⁵ jeweils unabhängig voneinander Wasserstoff, ein Halogen, eine C₁₋₆-Alkylgruppe oder eine C₂₋₆-Alkenylgruppe bezeichnen und der Rest R⁶ Wasserstoff oder eine Alkylgruppe mit 1 bis 6 Kohlenstoffatomen ist,
zugibt und bis zu einem Umsatz von mindestens 85,0 Gew.-%, bezogen auf das Gesamtgewicht der Komponenten A), B), C) und D), polymerisiert,
c) 35,0 bis 55,0 Gew.-Teile einer zweiten Zusammensetzung enthaltend:
E) 80,0 bis 100,0 Gew.- Teile (Meth)acrylate
F) 0,05 bis 5,0 Gew.-Teile vernetzende Monomere und
G) 0,0 bis 25,0 Gew.- Teile styrolische Monomere der allgemeinen Formel (I),
zugibt und bis zu einem Umsatz von mindestens 85,0 Gew.-%, bezogen auf das Gesamtgewicht der Komponenten E), F) und G), polymerisiert,
d) 10,0 bis 30,0 Gew.-Teile einer dritten Zusammensetzung enthaltend:
H) 50,0 bis 100,0 Gew.- Teile Alkylmethacrylate mit 1 bis 20 Kohlenstoffatomen im Alkylrest,
I) 0,0 bis 40,0 Gew.- Teile Alkylacrylate mit 1 bis 20 Kohlenstoffatomen im Alkylrest und
J) 0,0 bis 10,0 Gew.- Teile styrolische Monomere der allgemeinen Formel (I)
zugibt und bis zu einem Umsatz von mindestens 85,0 Gew.-%, bezogen auf das Gesamtgewicht der Komponenten H), I) und J), polymerisiert,
wobei sich die angegebenen Gewichtsteile der Zusammensetzungen b), c) und d) zu 100,0 Gewichtsteilen addieren,
wobei die relativen Anteile aller Substanzen A) bis J) derart gewählt sind, dass man Kern-Schale-Schale-Teilchen mit einem Gesamtradius, gemessen nach dem Coulter-Verfahren, im Bereich von > 125,0 nm und < 180 nm, vorzugsweise im Bereich von > 128,0 nm und < 160 nm, bevorzugt im Bereich von > 135,0 nm und < 150 nm, erhält und
wobei jede Polymerisation in dem Verfahren gemäß I. bei einer Temperatur im Bereich von > 60 bis < 95 °C, vorzugsweise > 70°C und < 90°C, weiter bevorzugt ≥ 75 und ≤ 85°C, durchgeführt wird;
II. 1,0 bis 90,0 Gew.-%, vorzugsweise 1,0 bis 85,0 Gew.-%, weiter bevorzugt 1,0 bis 80,0 Gew.-%, mindestens eines (Meth)acrylpolymers,
III. 0,0 bis 45 Gew.-%, vorzugsweise 0,0 bis 30 Gew.-%, bevorzugt 0,0 bis 10,0 Gew.-%, Styrol-Acrylnitril-Copolymere, und
IV. 0,0 bis 10,0 Gew.-% weiterer Zusatzstoffe
wobei sich die Gewichtsprozente der Komponenten I) bis IV) zu 100,0 Gew.-% addieren und
wobei II., oder die Mischung aus II., III. und/oder IV. so gewählt ist, dass sie einen Brechungsindex aufweist, der sich bei einer Messung gemäß ISO 489 (Methode A) um nicht mehr als 0,01, vorzugsweise um nicht mehr als 0,002, bevorzugt um nicht mehr als 0,001, Einheiten vom Brechungsindex von I. unterscheidet.

2. Formmasse gemäß Anspruch 1, **dadurch gekennzeichnet, dass** die zweite Zusammensetzung des Kern-Schale-Schale-Teilchens nach I. als G) mehr als 8,0 und bis zu 19,95 Gew.- Teile, vorzugsweise 15,0 bis 19,95 Gew.-Teile, styrolische Monomere der allgemeinen Formel (I) enthält.

3. Formmasse gemäß mindestens einem der vorherigen Ansprüche, **dadurch gekennzeichnet, dass** die zweite Zusammensetzung des Kern-Schale-Schale-Teilchens nach I. einen Tg < -10°C hat.

4. Formmasse gemäß mindestens einem der vorherigen Ansprüche, **dadurch gekennzeichnet, dass** man in dem Verfahren zum Erhalten von I. die Polymerisation in den Schritten b) bis d) unter Verwendung eines Peroxodisulfates, vorzugsweise unter Verwendung von Ammonium- und/oder Alkaliperoxodisulfat, initiiert.

5. Formmasse gemäß mindestens einem der vorherigen Ansprüche, **dadurch gekennzeichnet, dass** die Formmasse
a. eine Charpy-Schlagzähigkeit nach ISO 179 von mindestens 40,0 kJ/m², vorzugweise von mindestens 60,0 kJ/m², bevorzugt von mindestens 80,0 kJ/m², bei 23 °C und
b. einen Haze nach ASTM D 1003 (1997) von ≤ 3% bei 23 °C, bevorzugt von ≤ 2% bei 23 °C, weiter bevorzugt von ≤ 1,5% bei 23 °C, ganz bevorzugt von ≤ 1,0% bei 23 °C, und einen Haze nach ASTM D 1003 (1997) von ≤ 21% bei 80 °C, bevorzugt von ≤ 20% bei 80 °C, weiter bevorzugt von ≤ 18% bei 80 °C, ganz bevorzugt von ≤ 16% bei 80 °C, und
c. eine Vicat-Erweichungstemperatur nach DIN ISO 306 (Aug. 1994) von ≥ 98°C, vorzugsweise ≥ 99°C, bevorzugt ≥ 100°C, ganz bevorzugt ≥ 102°C, und
d. eine Schmelzevolumenrate MVR nach ISO 1133 (230°C; 3,8Kg) von ≥ 1,5 cm³/10min, bevorzugt von ≥ 2,0 cm³/10min, weiter bevorzugt von ≥ 2,5 cm³/10min aufweist.

6. Formmasse gemäß mindestens einem der vorherigen Ansprüche, **dadurch gekennzeichnet, dass** das mindestens eine (Meth)acrylpolymer gemäß II., jeweils bezogen auf sein Gesamtgewicht,
a) 52,0 bis 100,0 Gew.-% Alkylmethacrylat-Wiederholungseinheiten mit 1 bis 20 Kohlenstoffatomen im Alkylrest,
b) 0,0 bis 40,0 Gew.-% Alkylacrylat-Wiederholungseinheiten mit 1 bis 20 Kohlenstoffatomen im Alkylrest und
c) 0,0 bis 8,0 Gew.-% styrolische Wiederholungseinheiten der allgemeinen Formel (I) umfasst, wobei sich die Gewichtsprozente zu 100,0 Gew.-% addieren.

7. Formmasse gemäß mindestens einem der vorherigen Ansprüche, **dadurch gekennzeichnet, dass** das mindestens eine (Meth)acrylpolymer gemäß II., jeweils bezogen auf sein Gesamtgewicht, ≤ 8 Gew.-% Alkylacrylat-Wiederholungseinheiten mit 1 bis 20 Kohlenstoffatomen im Alkylrest, bevorzugt ≤ 6 Gew.-% , weiter bevorzugt ≤ 4 Gew.-%, ganz bevorzugt ≤ 2 Gew.-%, ganz besonders bevorzugt ≤ 1 Gew.-%, enthält.

8. Formmasse gemäß mindestens einem der vorherigen Ansprüche, **dadurch gekennzeichnet, dass** die Formmasse Styrol-Acrylnitril-Copolymere gemäß III. enthält, wobei die Styrol-Acrylnitril-Copolymere durch Polymerisation einer Mischung erhalten wurden, die aus
70 bis 92 Gew.-% Styrol
8 bis 30 Gew.-% Acrylnitril und
0 bis 22 Gew.-% weiterer Comonomere, jeweils bezogen auf das Gesamtgewicht der Mischung, besteht.

9. Formmasse gemäß mindestens einem der vorherigen Ansprüche, **dadurch gekennzeichnet, dass** die Formmasse bezogen auf ihr Gesamtgewicht 0,1 bis 10,0 Gew.-% eines weiteren Polymerisates als Zusatzstoff gemäß IV. enthält, welches im Vergleich mit dem mindestens einen (Meth)acrylpolymer gemäß II. ein um mindestens 10 % höheres Gewichtsmittel des Molekulargewichtes aufweist.

10. Formartikel erhältlich aus einer Formmasse gemäß mindestens einem der Ansprüche 1 bis 9.

11. Formartikel gemäß Anspruch 10, **dadurch gekennzeichnet, dass** der Formartikel
a. eine Charpy-Schlagzähigkeit nach ISO 179 von mindestens 40,0 kJ/m², vorzugweise von mindestens 60,0 kJ/m², bevorzugt von mindestens 80,0 kJ/m², bei 23 °C und
b. einen Haze nach ASTM D 1003 (1997) von ≤ 3% bei 23 °C, bevorzugt von ≤ 2% bei 23 °C, weiter bevorzugt von ≤ 1,5% bei 23 °C, ganz bevorzugt von ≤ 1,0% bei 23 °C, und einen Haze nach ASTM D 1003 (1997) von ≤ 21% bei 80 °C, bevorzugt von ≤ 20% bei 80 °C, weiter bevorzugt von ≤ 18% bei 80 °C, ganz bevorzugt von ≤ 16% bei 80 °C, und
c. eine Vicat-Erweichungstemperatur nach DIN ISO 306 (Aug. 1994) von ≥ 98°C, vorzugsweise ≥ 99°C, bevorzugt ≥ 100°C, ganz bevorzugt ≥ 102°C, und
d. eine Schmelzevolumenrate MVR nach ISO 1133 (230°C; 3,8Kg) von ≥ 1,5 cm³/10min, bevorzugt von ≥ 2,0 cm³/10min, weiter bevorzugt von ≥ 2,5 cm³/10min aufweist.

12. Verwendung einer Formmasse gemäß mindestens einem der Ansprüche 1 bis 9
zur Herstellung von großen und/oder dünnwandigen schlagzähen Bauteilen;
zur Herstellung von Verscheibungen/Verglasungen, insbesondere Abdeckscheiben für Fahrzeugbeleuchtungen, insbesondere Scheinwerfern oder Rückleuchten oder eingefärbten Abdeckgläsern für Automobilleuchten;
zur Herstellung von Displays für Kommunikationsgeräte, insbesondere PDAs, Mobiltelefone, Handys, vorzugsweise Smartphones; Tablet-PCs; TV-Geräte; Küchengeräte und andere elektronische Geräte; oder
zur Herstellung von Gebäude- Innen und/oder Außenbeleuchtungen.

13. Verwendung eines Formartikels gemäß einem der Ansprüche 10 oder 11 als schlagzähes und großes und/oder dünnwandiges Bauteil aus Spritzguß;
als Verscheibungen/Verglasungen (wie z.B. Abdeckscheiben für Fahrzeugbeleuchtungen, d.h. Scheinwerfern oder Rückleuchten; eingefärbte Abdeckgläser für Automobilleuchten;
als Display für ein Kommunikationsgerät, insbesondere ein PDA, ein Mobiltelefon, ein Handy, vorzugsweise ein Smartphone; ein TV-Gerät; ein Tablet-PC; ein Küchengerät oder ein anderes elektronisches Gerät; oder
als Gebäude- Innen und/oder Außenbeleuchtungen.

## Claims

1. Moulding composition comprising, based in each case on the total weight thereof:
I. 10.0% to ≤ 35.0% by weight, preferably 12.0% to 33.0% by weight, further preferably 14.0% to 30% by weight, very preferably 15.0% to 25.0% by weight, of at least one core-shell-shell particle produced or producible by a process in which
a) water and emulsifier are initially charged,
b) 20.0 to 45.0 parts by weight of a first composition comprising:
A) 50.0 to 99.9 parts by weight, preferably 71.0 to 99.9 parts by weight, of alkyl methacrylates having 1 to 20 carbon atoms in the alkyl radical,
B) 0.0 to 40.0 parts by weight, preferably 0.0 to 29.0 parts by weight, of alkyl acrylates having 1 to 20 carbon atoms in the alkyl radical,
C) 0.1 to 10.0 parts by weight of crosslinking monomers and
D) 0.0 to 8.0 parts by weight of styrenic monomers of the general formula (I) 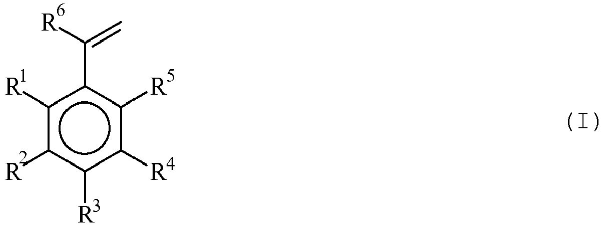 where the R¹ to R⁵ radicals each independently denote hydrogen, a halogen, a C₁₋₆-alkyl group or a C₂₋₆-alkenyl group and the R⁶ radical is hydrogen or an alkyl group having 1 to 6 carbon atoms,
are added and polymerized up to a conversion of at least 85.0% by weight, based on the total weight of components A), B), C) and D),
c) 35.0 to 55.0 parts by weight of a second composition comprising:
E) 80.0 to 100.0 parts by weight of (meth)acrylates,
F) 0.05 to 5.0 parts by weight of crosslinking monomers and
G) 0.0 to 25.0 parts by weight of styrenic monomers of the general formula (I)
are added and polymerized up to a conversion of at least 85.0% by weight, based on the total weight of components E), F) and G),
d) 10.0 to 30.0 parts by weight of a third composition comprising:
H) 50.0 to 100.0 parts by weight of alkyl methacrylates having 1 to 20 carbon atoms in the alkyl radical,
I) 0.0 to 40.0 parts by weight of alkyl acrylates having 1 to 20 carbon atoms in the alkyl radical and
J) 0.0 to 10.0 parts by weight of styrenic monomers of the general formula (I)
are added and polymerized up to a conversion of at least 85.0% by weight, based on the total weight of components H), I) and J),
where the stated proportions by weight of compositions b), c) and d) add up to 100.0 parts by weight,
where the relative proportions of all substances A) to J) are chosen so as to obtain core-shell-shell particles having a total radius, measured by the Coulter method, in the range of > 125.0 nm and < 180 nm, preferably in the range of > 128.0 nm and < 160 nm, more preferably in the range of > 135.0 nm and < 150 nm, and
where each polymerization in the process according to I. is conducted at a temperature in the range of > 60 to < 95 °C, preferably > 70°C and < 90°C, further preferably ≥ 75 and ≤ 85°C;
II. 1.0% to 90.0% by weight, preferably 1.0% to 85.0% by weight, further preferably 1.0% to 80.0% by weight, of at least one (meth)acrylic polymer,
III. 0.0% to 45% by weight, preferably 0.0% to 30% by weight, more preferably 0.0% to 10.0% by weight, of styrene-acrylonitrile copolymers, and
IV. 0.0% to 10.0% by weight of further additives, where the percentages by weight of components I) to IV) add up to 100.0% by weight and
where II., or the mixture of II., III. and/or IV., is chosen such that it has a refractive index which, when measured according to ISO 489 (Method A), differs by not more than 0.01, preferably by not more than 0.002, more preferably by not more than 0.001, unit from the refractive index of I.

2. Moulding composition according to Claim 1, **characterized in that** the second composition of the core-shell-shell particle according to I. comprises, as G), more than 8.0 and up to 19.95 parts by weight, preferably 15.0 to 19.95 parts by weight, of styrenic monomers of the general formula (I).

3. Moulding composition according to at least one of the preceding claims, **characterized in that** the second composition of the core-shell-shell particle according to I. has a Tg of < -10°C.

4. Moulding composition according to at least one of the preceding claims, **characterized in that**, in the process for obtaining I., the polymerization in steps b) to d) is initiated using a peroxodisulphate, preferably using ammonium peroxodisulphate and/or alkali metal peroxodisulphate.

5. Moulding composition according to at least one of the preceding claims, **characterized in that** the moulding composition has
a. a Charpy impact resistance to ISO 179 of at least 40.0 kJ/m², preferably of at least 60.0 kJ/m², more preferably of at least 80.0 kJ/m², at 23°C and
b. a haze to ASTM D 1003 (1997) of ≤ 3% at 23°C, preferably of ≤ 2% at 23°C, further preferably of ≤ 1.5% at 23°C, very preferably of ≤ 1.0% at 23°C, and a haze to ASTM D 1003 (1997) of ≤ 21% at 80°C, preferably of ≤ 20% at 80°C, further preferably of ≤ 18% at 80°C, very preferably of ≤ 16% at 80°C, and
c. a Vicat softening temperature to DIN ISO 306 (Aug. 1994) of ≥ 98°C, preferably ≥ 99°C, more preferably ≥ 100°C, very preferably ≥ 102°C, and
d. a melt volume flow rate MVR to ISO 1133 (230°C; 3.8 kg) of ≥ 1.5 cm³/10min, preferably of ≥ 2.0 cm³/10min, further preferably of ≥ 2.5 cm³/10min.

6. Moulding composition according to at least one of the preceding claims, **characterized in that** the at least one (meth)acrylic polymer according to II. comprises, based in each case on the total weight thereof:
a) 52.0% to 100.0% by weight of repeat alkyl methacrylate units having 1 to 20 carbon atoms in the alkyl radical,
b) 0.0% to 40.0% by weight of repeat alkyl acrylate units having 1 to 20 carbon atoms in the alkyl radical and
c) 0.0% to 8.0% by weight of repeat styrenic units of the general formula (I),
where the percentages by weight add up to 100.0% by weight.

7. Moulding composition according to at least one of the preceding claims, **characterized in that** the at least one (meth)acrylic polymer according to II., based in each case on the total weight thereof, contains ≤ 8% by weight of repeat alkyl acrylate units having 1 to 20 carbon atoms in the alkyl radical, preferably ≤ 6% by weight, further preferably ≤ 4% by weight, very preferably ≤ 2% by weight, most preferably ≤ 1% by weight.

8. Moulding composition according to at least one of the preceding claims, **characterized in that** the moulding composition comprises styrene-acrylonitrile copolymers according to III., the styrene-acrylonitrile copolymers having been obtained by polymerizing a mixture consisting of
70% to 92% by weight of styrene,
8% to 30% by weight of acrylonitrile and
0% to 22% by weight of further comonomers, based in each case on the total weight of the mixture.

9. Moulding composition according to at least one of the preceding claims, **characterized in that** the moulding composition, based on the total weight thereof, comprises 0.1% to 10.0% by weight of a further polymer as additive according to IV., having a weight-average molecular weight at least 10% higher compared to the at least one (meth)acrylic polymer according to II.

10. Moulded article obtainable from a moulding composition according to at least one of Claims 1 to 9.

11. Moulded article according to Claim 10, **characterized in that** the moulded article has
a. a Charpy impact resistance to ISO 179 of at least 40.0 kJ/m², preferably of at least 60.0 kJ/m², more preferably of at least 80.0 kJ/m², at 23°C and
b. a haze to ASTM D 1003 (1997) of ≤ 3% at 23°C, preferably of ≤ 2% at 23°C, further preferably of ≤ 1.5% at 23°C, very preferably of ≤ 1.0% at 23°C, and a haze to ASTM D 1003 (1997) of ≤ 21% at 80°C, preferably of ≤ 20% at 80°C, further preferably of ≤ 18% at 80°C, very preferably of ≤ 16% at 80°C, and
c. a Vicat softening temperature to DIN ISO 306 (Aug. 1994) of ≥ 98°C, preferably ≥ 99°C, more preferably ≥ 100°C, very preferably ≥ 102°C, and
d. a melt volume flow rate MVR to ISO 1133 (230°C; 3.8 kg) of ≥ 1.5 cm³/10min, preferably of ≥ 2.0 cm³/10min, further preferably of ≥ 2.5 cm³/10min.

12. Use of a moulding composition according to at least one of Claims 1 to 9
for production of large and/or thin-walled impact-resistant components;
for production of glass panes/glazing, especially glass covers for motor vehicle lights, especially headlamps or rear lights or coloured glass covers for automobile lights;
for production of displays for communication devices, especially PDAs, mobile phones, preferably smartphones; tablet PCs; TV devices; kitchen appliances and other electronic devices; or
for production of building interior and/or exterior lighting.

13. Use of a moulded article according to either of Claims 10 and 11 as an impact-modified and large and/or thin-walled injection-moulded component;
as glass panes/glazing (for example glass covers for motor vehicle lights, i.e. headlamps or rear lights; coloured glass covers for automobile lights;
as a display for a communication device, especially a PDA, a mobile phone, preferably a smartphone; a TV device; a tablet PC; a kitchen appliance or another electronic device; or
as building interior and/or exterior lighting.

## Revendications

1. Matériau de moulage contenant, à chaque fois par rapport à son poids total :
I. 10,0 à ≤ 35,0 % en poids, de préférence 12,0 à 33,0 % en poids, de manière davantage préférée 14,0 à 30 % en poids, de manière tout particulièrement préférée 15,0 à 25,0 % en poids, d'au moins une particule noyau-enveloppe-enveloppe fabriquée ou pouvant être fabriquée par un procédé selon lequel
a) de l'eau et un émulsifiant sont chargés initialement,
b) 20,0 à 45,0 parties en poids d'une première composition contenant :
A) 50,0 à 99,9 parties en poids, de préférence 71, 0 à 99, 9 parties en poids, de méthacrylates d'alkyle contenant 1 à 20 atomes de carbone dans le radical alkyle,
B) 0,0 à 40,0 parties en poids, de préférence 0,0 à 29,0 parties en poids, d'acrylates d'alkyle contenant 1 à 20 atomes de carbone dans le radical alkyle,
C) 0,1 à 10,0 parties en poids de monomères réticulants et
D) 0,0 à 8,0 parties en poids de monomères styréniques de formule générale (I) 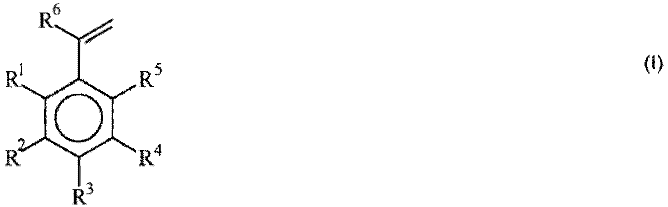 dans laquelle les radicaux R¹ à R⁵ désignent chacun indépendamment les uns des autres hydrogène, un halogène, un groupe alkyle en C₁₋₆ ou un groupe alcényle en C₂₋₆, et le radical R⁶ représente l'hydrogène ou un groupe alkyle de 1 à 6 atomes de carbone,
est ajoutée, et polymérisée jusqu'à une conversion d'au moins 85,0 % en poids, par rapport au poids total des composants A), B), C) et D),
c) 35,0 à 55,0 parties en poids d'une deuxième composition contenant :
E) 80,0 à 100,0 parties en poids de (méth)acrylates,
F) 0,05 à 5,0 parties en poids de monomères réticulants et
G) 0,0 à 25,0 parties en poids de monomères styréniques de formule générale (I)
est ajoutée, et polymérisée jusqu'à une conversion d'au moins 85,0 % en poids, par rapport au poids total des composants E), F) et G),
d) 10,0 à 30,0 parties en poids d'une troisième composition contenant :
H) 50,0 à 100,0 parties en poids de méthacrylates d'alkyle contenant 1 à 20 atomes de carbone dans le radical alkyle,
I) 0,0 à 40,0 parties en poids d'acrylates d'alkyle contenant 1 à 20 atomes de carbone dans le radical alkyle et
J) 0,0 à 10,0 parties en poids de monomères styréniques de formule générale (I),
est ajoutée, et polymérisée jusqu'à une conversion d'au moins 85,0 % en poids, par rapport au poids total des composants H), I) et J),
la somme des parties en poids indiquées des compositions b), c) et d) étant de 100,0 parties en poids,
les proportions relatives de toutes les substances A) à J) étant choisies de manière à obtenir des particules noyau-enveloppe-enveloppe ayant un rayon total, mesuré par le procédé Coulter, dans la plage > 125,0 nm et < 180 nm, de préférence dans la plage > 128,0 nm et < 160 nm, avantageusement dans la plage > 135,0 nm et < 150 nm, et
chaque polymérisation dans le procédé selon I. étant réalisée à une température dans la plage allant de > 60 à < 95 °C, de préférence > 70 °C et < 90 °C, de manière davantage préférée ≥ 75 et ≤ 85 °C ;
II. 1,0 à 90,0 % en poids, de préférence 1,0 à 85,0 % en poids, de manière davantage préférée 1,0 à 80,0 % en poids, d'au moins un polymère (méth)acrylique,
III. 0,0 à 45 % en poids, de préférence 0,0 à 30 % en poids, de préférence 0,0 à 10,0 % en poids, de copolymères de styrène-acrylonitrile, et
IV. 0,0 à 10,0 % en poids d'autres additifs,
la somme des pourcentages en poids des composants I) à IV) étant de 100,0 % en poids, et
II., ou le mélange de II., III. et/ou IV. étant choisi de manière à présenter un indice de réfraction qui, lors d'une mesure selon ISO 489 (méthode A), ne diffère pas de plus de 0,01, de préférence pas de plus de 0,002, avantageusement pas de plus de 0,001, unité de l'indice de réfraction de I.

2. Matériau de moulage selon la revendication 1, **caractérisé en ce que** la deuxième composition des particules noyau-enveloppe-enveloppe selon I. contient en tant que G) plus de 8,0 et jusqu'à 19,95 parties en poids, de préférence 15,0 à 19,95 parties en poids, de monomères styréniques de formule générale (I).

3. Matériau de moulage selon au moins l'une quelconque des revendications précédentes, **caractérisé en ce que** la deuxième composition des particules noyau-enveloppe-enveloppe selon I. présente une Tg < -10 °C.

4. Matériau de moulage selon au moins l'une quelconque des revendications précédentes, **caractérisé en ce que**, dans le procédé d'obtention de I., la polymérisation aux étapes b) à d) est initiée en utilisant un peroxodisulfate, de préférence en utilisant du peroxodisulfate d'ammonium et/ou d'alcali.

5. Matériau de moulage selon au moins l'une quelconque des revendications précédentes, **caractérisé en ce que** le matériau de moulage présente :
a. une résistance aux impacts Charpy selon ISO 179 d'au moins 40,0 kJ/m², de préférence d'au moins 60,0 kJ/m², avantageusement d'au moins 80,0 kJ/m², à 23 °C, et
b. un trouble selon ASTM D 1003 (1997) ≤ 3 % à 23 °C, de préférence ≤ 2 % à 23 °C, de manière davantage préférée ≤ 1,5 % à 23 °C, de manière tout particulièrement préférée ≤ 1,0 % à 23 °C, et un trouble selon ASTM D 1003 (1997) ≤ 21 % à 80 °C, de préférence ≤ 20 % à 80 °C, de manière davantage préférée ≤ 18 % à 80 °C, de manière tout particulièrement préférée ≤ 16 % à 80 °C, et
c. une température de ramollissement de Vicat selon DIN ISO 306 (août 1994) ≥ 98 °C, de préférence ≥ 99 °C, avantageusement ≥ 100 °C, de manière tout particulièrement préférée ≥ 102 °C, et
d. un indice de fluidité MVR selon ISO 1133 (230 °C ; 3,8 kg) ≥ 1,5 cm³/10 minutes, de préférence ≥ 2,0 cm³/10 minutes, de manière davantage préférée ≥ 2,5 cm³/10 minutes.

6. Matériau de moulage selon au moins l'une quelconque des revendications précédentes, **caractérisé en ce que** ledit au moins un polymère (méth)acrylique selon II. comprend, à chaque par rapport à son poids total,
a) 52,0 à 100,0 % en poids d'unités de répétition de méthacrylate d'alkyle contenant 1 à 20 atomes de carbone dans le radical alkyle,
b) 0,0 à 40,0 % en poids d'unités de répétition d'acrylate d'alkyle contenant 1 à 20 atomes de carbone dans le radical alkyle, et
c) 0,0 à 8,0 % en poids d'unités de répétition styréniques de formule générale (I),
la somme des pourcentages en poids étant de 100,0 % en poids.

7. Matériau de moulage selon au moins l'une quelconque des revendications précédentes, **caractérisé en ce que** ledit au moins un polymère (méth)acrylique selon II. contient, à chaque fois par rapport à son poids total, ≤ 8 % en poids d'unités de répétition d'acrylate d'alkyle contenant 1 à 20 atomes de carbone dans le radical alkyle, de préférence ≤ 6 % en poids, de manière davantage préférée ≤ 4 % en poids, tout préférentiellement ≤ 2 % en poids, de manière tout particulièrement préférée ≤ 1 % en poids.

8. Matériau de moulage selon au moins l'une quelconque des revendications précédentes, **caractérisé en ce que** le matériau de moulage contient des copolymères de styrène-acrylonitrile selon III., les copolymères de styrène-acrylonitrile ayant été obtenus par polymérisation d'un mélange constitué par :
70 à 92 % en poids de styrène,
8 à 30 % en poids d'acrylonitrile et
0 à 22 % en poids d'autres comonomères, à chaque fois par rapport au poids total du mélange.

9. Matériau de moulage selon au moins l'une quelconque des revendications précédentes, **caractérisé en ce que** le matériau de moulage contient, par rapport à son poids total, 0,1 à 10,0 % en poids d'un autre polymère en tant qu'additif selon IV, qui présente en comparaison dudit au moins un polymère (méth)acrylique selon II. une moyenne en poids du poids moléculaire au moins 10 % plus élevée.

10. Article moulé pouvant être obtenu à partir d'un matériau de moulage selon au moins l'une quelconque des revendications 1 à 9.

11. Article moulé selon la revendication 10, **caractérisé en ce que** l'article moulé présente :
a. une résistance aux impacts Charpy selon ISO 179 d'au moins 40,0 kJ/m², de préférence d'au moins 60,0 kJ/m², avantageusement d'au moins 80,0 kJ/m², à 23 °C, et
b. un trouble selon ASTM D 1003 (1997) ≤ 3 % à 23 °C, de préférence ≤ 2 % à 23 °C, de manière davantage préférée ≤ 1,5 % à 23 °C, de manière tout particulièrement préférée ≤ 1,0 % à 23 °C, et un trouble selon ASTM D 1003 (1997) ≤ 21 % à 80 °C, de préférence ≤ 20 % à 80 °C, de manière davantage préférée ≤ 18 % à 80 °C, de manière tout particulièrement préférée ≤ 16 % à 80 °C, et
c. une température de ramollissement de Vicat selon DIN ISO 306 (août 1994) ≥ 98 °C, de préférence ≥ 99 °C, avantageusement ≥ 100 °C, de manière tout particulièrement préférée ≥ 102 °C, et
d. un indice de fluidité MVR selon ISO 1133 (230 °C ; 3,8 kg) ≥ 1,5 cm³/10 minutes, de préférence ≥ 2,0 cm³/10 minutes, de manière davantage préférée ≥ 2,5 cm³/10 minutes.

12. Utilisation d'un matériau de moulage selon au moins l'une quelconque des revendications 1 à 9 pour la fabrication de composants résistants aux chocs de grande taille et/ou à parois minces ;
pour la fabrication de vitrages/vitres, notamment de plaques de recouvrement pour éclairages de véhicules, notamment phares ou phares arrières ou verres de recouvrement colorés pour lampes automobiles ;
pour la fabrication d'écrans pour appareils de communication, notamment PDA, téléphones portables, mobiles, de préférence smartphones ; tablettes PC ; télévisions ; appareils de cuisine et autres appareils électroniques ; ou
pour la fabrication d'éclairages intérieurs et/ou extérieurs de bâtiments.

13. Utilisation d'un article moulé selon l'une quelconque des revendications 10 ou 11 en tant que composant résistant aux chocs et de grande taille et/ou à parois minces issu d'un moulage par injection ;
en tant que vitrages/vitres (tels que p. ex. plaques de recouvrement pour éclairages de véhicules, c.-à-d. phares ou phares arrières ; verres de recouvrement colorés pour lampes automobiles ;
en tant qu'écran pour appareil de communication, notamment PDA, téléphone portable, mobile, de préférence smartphone ; télévision ; tablette PC ; appareil de cuisine et autre appareil électronique ; ou
en tant qu'éclairages intérieurs et/ou extérieurs de bâtiments.
